# EUROPEAN PATENT SPECIFICATION

(11) **EP 2 151 604 B1**
(45) Date of publication and mention of the grant of the patent: **09.11.2011**
(21) Application number: 08827790.0
(22) Date of filing: 13.08.2008
(51) Int. Cl.: F16H 3/093, F16H 61/00

(54) **STEPPED AUTOMATIC TRANSMISSION FOR STRADDLE RIDING TYPE VEHICLE, POWER UNIT WITH THE STEPPED AUTOMATIC TRANSMISSION, AND STRADDLE RIDING TYPE VEHICLE WITH THE POWER UNIT**
AUTOMATISCHES SCHRITTGETRIEBE FÜR SATTELFAHRZEUGE, ANTRIEBSEINHEIT MIT DEM AUTOMATISCHEN SCHRITTGETRIEBE UND SATTELFAHRZEUG MIT DER ANTRIEBSEINHEIT
TRANSMISSION AUTOMATIQUE ÉTAGÉE POUR VÉHICULE DE TYPE À CONDUITE À CALIFOURCHON, UNITÉ MOTRICE AVEC LA TRANSMISSION AUTOMATIQUE ÉTAGÉE ET VÉHICULE DE TYPE À CONDUITE À CALIFOURCHON AVEC L'UNITÉ MOTRICE

(30) Priority: 21.08.2007 JP 2007214313; 08.08.2008 JP 2008204930
(43) Date of publication of application: 10.02.2010
(73) Proprietor: Yamaha Hatsudoki Kabushiki Kaisha, Iwata-shi, Shizuoka 438-8501 (JP)
(72) Inventor: OISHI, Akifumi c/o YAMAHA HATSUDOKI KABUSHIKI KAISHA, Iwata-shi Shizuoka 438-8501 (JP); MURAYAMA, Takuji c/o YAMAHA HATSUDOKI KABUSHIKI KAISHA, Iwata-shi Shizuoka 438-8501 (JP); HATA, Shinichiro c/o YAMAHA HATSUDOKI KABUSHIKI KAISHA, Iwata-shi Shizuoka 438-8501 (JP)
(74) Representative: Zimmermann, Tankred Klaus
(86) International application number: PCT/JP2008/064512
(87) International publication number: WO 2009/025216

(56) References cited:
- EP-A1- 1 770 306
- FR-A1- 2 831 632
- JP-A- 61 165 026
- JP-A- 2007 177 905
- JP-U- 47 029 144
- JP-U- 53 047 474
- US-A- 5 327 793

## Description

### [Technical Field]

The present invention relates to a stepped automatic transmission for straddle-type vehicles, a power unit provided with the same, and a straddle-type vehicle provided with the same.

### [Background Art]

In recent years, exhaust gas regulations for straddle-type vehicles have become strict. In keeping with this, high attention has been paid to stepped automatic transmissions being higher in energy transmission efficiency than stepless type automatic transmissions.

A stepped automatic transmission 500 shown in Fig. 24 is disclosed in, for example, Patent Document 1. As shown in Fig. 24, the stepped automatic transmission 500 comprises a transmission case 501. The transmission case 501 comprises a left transmission case 502 and a right transmission case 503. The left transmission case 502 and the right transmission case 503 are caused to butt against each other in a vehicle width direction. With the stepped automatic transmission 500, a left end of a crank shaft 504 is positioned in the transmission case 501. In the transmission case 501, an automatic, centrifugal start clutch 505 is provided on the crank shaft 504. Switchover to 2-speed from 1-speed is made by the automatic, centrifugal start clutch 505.

A main spindle 506 is arranged rearwardly of the crank shaft 504. The main spindle 506 is supported rotatably by the left transmission case 502 and the right transmission case 503. An automatic, centrifugal high-speed clutch 507 is provided on the main spindle 506. Switchover to 3-speed from 2-speed is made by the automatic, centrifugal high-speed clutch 507.

With the stepped automatic transmission 500, the automatic, centrifugal high-speed clutch 507 and the automatic, centrifugal start clutch 505 are arranged in a manner to overlap each other in the vehicle width direction. Therefore, with the stepped automatic transmission 500, it is intended for compactness in the vehicle width direction.
[Patent Document 1] JP-A-2003-90260
EP 1 770 306 A1 describes a vehicular power transmission system in which shifting is done by a first shift clutch and a second shift clutch to which a power of an engine is transmitted, the vehicular power transmission system being excellent in efficiency of power transmission and durability, being capable of being manufactured at low cost and of relieving a start shock. A transmission of a vehicular power transmission system, according to the preamble of claim 1, has a first shifting part and a second shifting part which shift a power of an internal combustion engine, a first shift clutch transmitting and interrupting the power to the first shifting part, and a second shift clutch transmitting and interrupting the power to the second shifting part. A start clutch transmitting and interrupting the power to the first shift clutch and the second shift clutch is constructed of a centrifugal clutch having a clutch shoe.

### Summary of the Invention

It is an object of the invention to provide a stepped automatic transmission being high in energy transmission efficiency. This object is achieved by a transmission of claims 1.

### [Means for Solving the Problems]

The stepped automatic transmission of a straddle-type vehicle, according to the invention, comprises a right case, a left case, a first hydraulic clutch, and a second hydraulic clutch. The left case is arranged leftwardly of the right case. The left case together with the right case compartments and forms a transmission chamber. A rotating shaft is rotatably supported by the right case and the left case in the transmission chamber. A first hydraulic clutch is provided on the rotating shaft. The first hydraulic clutch includes a working chamber. A second hydraulic clutch is provided leftwardly of the first hydraulic clutch on the rotating shaft. The second hydraulic clutch includes a working chamber. The rotating shaft is formed with a first rotating shaft side oil path and a second rotating shaft side oil path. The first rotating shaft side oil path extends leftward from a right end of the rotating shaft. The first rotating shaft side oil path is connected to the working chamber of the first hydraulic clutch. The second rotating shaft side oil path extends rightward from a left end of the rotating shaft. The second rotating shaft side oil path is connected to the working chamber of the second hydraulic clutch. The second rotating shaft side oil path is made independent of the first rotating shaft side oil path. The right case is formed with a first case side oil path. The first case side oil path is connected to the first rotating shaft side oil path. The left case is formed with a second case side oil path. The second case side oil path is connected to the second rotating shaft side oil path.

A power unit according to the invention comprises the stepped automatic transmission according to the invention.

A straddle-type vehicle according to the invention comprises the power unit according to the invention.

### [Effect of the Invention]

According to the invention, it is possible to provide a stepped automatic transmission being high in energy transmission efficiency.

### [Brief Description of the Drawings]

[Fig. 1] Fig. 1 is a left side view showing a scooter type vehicle according to Embodiment 1.
[Fig. 2] Fig. 2 is a cross sectional view showing an engine unit in Embodiment 1.
[Fig. 3] Fig. 3 is a partial, cross sectional view showing the engine unit in Embodiment 1.
[Fig. 4] Fig. 4 is a diagram representative of the construction of the engine unit in Embodiment 1.
[Fig. 5] Fig. 5 is a partial, cross sectional view schematically showing the arrangement of a rotating shaft of the engine unit in Embodiment 1.
[Fig. 6] Fig. 6 is a partial, cross sectional view showing the engine unit representative of the construction of a downstream clutch group in Embodiment 1.
[Fig. 7] Fig. 7 is a conceptual view showing an oil circuit.
[Fig. 8] Fig. 8 is a partial, cross sectional view showing the engine unit to illustrate an oil filter, etc.
[Fig. 9] Fig. 9 is a diagram illustrating a power transmission path in a transmission at the time of 1-speed.
[Fig. 10] Fig. 10 is a diagram illustrating a power transmission path in the transmission at the time of 2-speed.
[Fig. 11] Fig. 11 is a diagram illustrating a power transmission path in the transmission at the time of 3-speed.
[Fig. 12] Fig. 12 is a diagram illustrating a power transmission path in the transmission at the time of 4-speed.
[Fig. 13] Fig. 13 is a left side view showing a moped according to Embodiment 2.
[Fig. 14] Fig. 14 is a right side view showing the moped according to Embodiment 2.
[Fig. 15] Fig. 15 is a right side view showing an engine unit in Embodiment 2.
[Fig. 16] Fig. 16 is a cross sectional view showing the engine unit in Embodiment 2.
[Fig. 17] Fig. 17 is a partial, cross sectional view showing the engine unit in Embodiment 2.
[Fig. 18] Fig. 18 is a partial, cross sectional view showing the engine unit representative of the construction of a downstream clutch group in Embodiment 2.
[Fig. 19] Fig. 19 is a diagram representative of the construction of an engine unit in Modification 1.
[Fig. 20] Fig. 20 is a diagram representative of the construction of an engine unit in Modification 2.
[Fig. 21] Fig. 21 is a diagram representative of the construction of an engine unit in Modification 3.
[Fig. 22] Fig. 22 is a partial, cross sectional view showing the engine unit representative of the construction of a downstream clutch group in Embodiment 1.
[Fig. 23] Fig. 23 is a partial, cross sectional view showing the engine unit representative of the construction of a downstream clutch group in Embodiment 2.

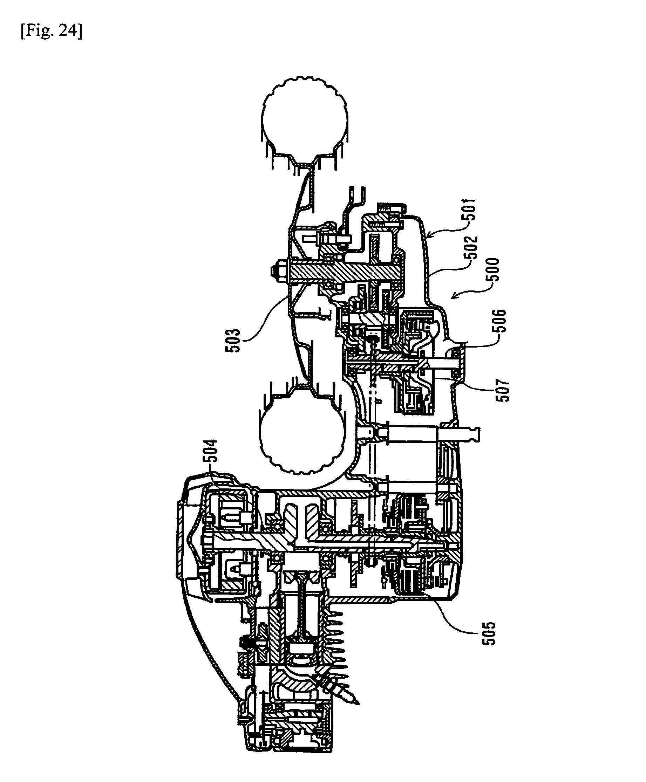

[Fig. 24] Fig. 24 is a cross sectional view showing a stepped automatic transmission disclosed in Patent Document 1.

### [Description of Reference Numerals and Signs]

1: scooter type vehicle (vehicle, straddle-type vehicle)
20: engine unit (power unit)
31: transmission (stepped automatic transmission)
32: crank case (right case)
50: transmission cover (left case)
54: second rotating shaft (rotating shaft)
66: fourth clutch (first hydraulic clutch)
66a, 70a: leak hole
70: third clutch (second hydraulic clutch)
133, 137: working chamber
145a: first rotating shaft side oil path
145b: first case side oil path
146a: second rotating shaft side oil path
146b: second case side oil path
[Best Mode for Carrying Out the Invention]

### <<Embodiment 1>>

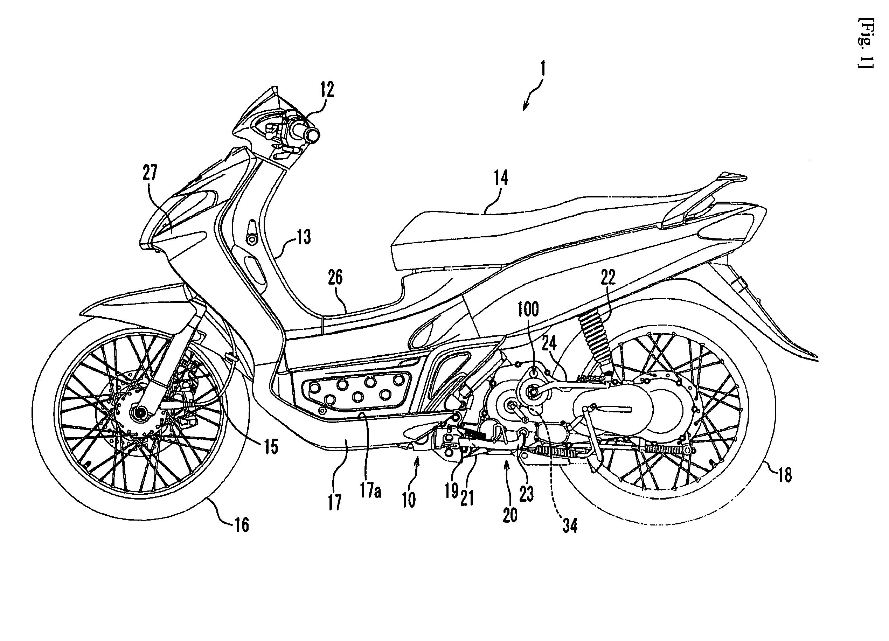

Embodiment 1 gives an explanation to an example of a preferred embodiment of the invention by referring, as an example of a motorcycle, to which the invention is applied, to a scooter type vehicle 1 shown in Fig. 1. However, "motorcycle" in the invention is not limited to a scooter type vehicle. The word "motorcycle" means a motorcycle in a so-called wide sense. Specifically, "motorcycle" in the specification of the present application indicates all vehicles, of which direction is changed by inclining the vehicle. At least one of a front wheel and a rear wheel may comprise a plurality of wheels. Specifically, "motorcycle" indicates a vehicle, of which at least one of a front wheel and a rear wheel may comprise two wheels arranged adjacent to each other. At least a motorcycle in a narrow sense, a scooter type vehicle, a moped type vehicle, and an off-road type vehicle are included in "motorcycle".

### (Outline construction of scooter type vehicle 1)

First, the outline construction of the scooter type vehicle 1 will be described with reference to Fig. 1. In addition, front and rear, and left and right directions in the following descriptions indicate ones as seen from a rider seated on a seat 14 of the scooter type vehicle 1.

The scooter type vehicle 1 comprises a body frame 10. The body frame 10 includes a head pipe (not shown). The head pipe extends downward and a little obliquely forward on a front portion of the vehicle. A steering shaft (not shown) is inserted rotatably into the head pipe. A handle 12 is provided at an upper end of the steering shaft. On the other hand, a front fork 15 is connected to a lower end of the steering shaft. A front wheel 16 as a driven wheel is mounted rotatably to a lower end of the front fork 15.

A body cover 13 is mounted to the body frame 10. A part of the body frame 10 is covered by the body cover 13. The body cover 13 includes leg shields 27. The leg shields 27 cover the front of the vehicle. Also, the body cover 13 includes foot put bases 17 arranged rearwardly of the leg shields 27 and provided on both left and right sides of the vehicle. Foot put surfaces 17a are formed on the foot put bases 17. Rider's feet on the scooter type vehicle 1 are put on the foot put surfaces 17a.

A center cover 26, which constitutes a part of the body cover 13, is arranged between the foot put bases 17 on both left and right sides. The center cover 26 projects upward from the foot put surfaces 17a of the foot put bases 17 and is formed in the form of a longitudinally extending tunnel. The seat 14, on which a rider is seated, is mounted to a portion of the body cover 13 rearwardly of the center cover 26. Also, a side stand 23 is mounted to the body frame 10 substantially centrally of the vehicle.

An engine unit 20 is suspended from the body frame 10 to be able to swing. Specifically, the engine unit 20 comprises a swing unit type engine. An engine bracket 21 is joined integrally to the engine unit 20. The engine unit 20 is mounted through the engine bracket 21 to a pivot shaft 19 of the body frame 10 to be able to swing. Also, one end of a cushion unit 22 is mounted to the engine unit 20. The other end of the cushion unit 22 is mounted to a rear portion of the body frame 10. The cushion unit 22 restricts swinging of the engine unit 20.

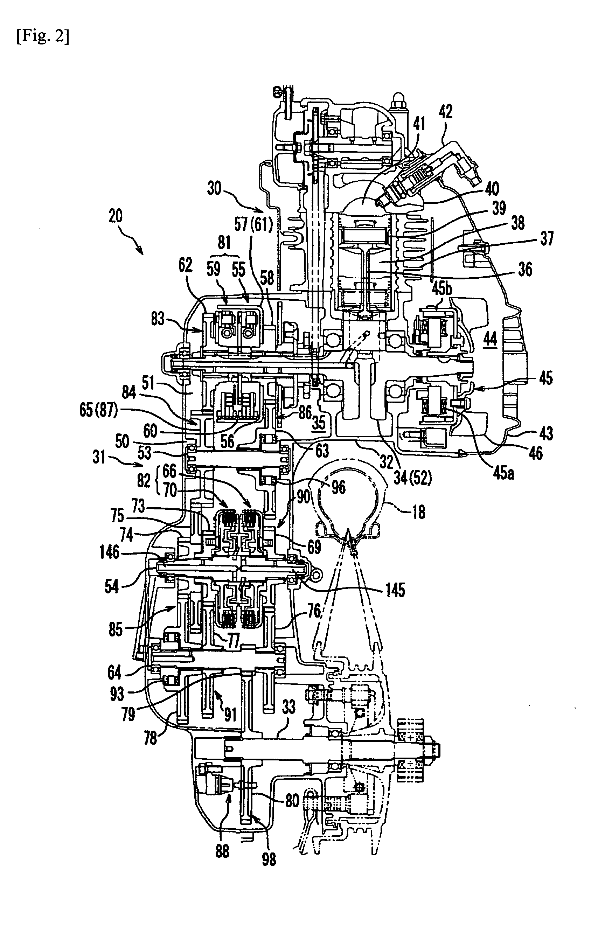

The engine unit 20 comprises an output shaft 33 (see Fig. 2) that outputs power generated in the engine unit 20. A rear wheel 18 is mounted to the output shaft 33. Therefore, the rear wheel 18 is driven by power generated in the engine unit 20. That is, in Embodiment 1, the rear wheel 18 constitutes a drive wheel.

As shown in Fig. 2, according to the embodiment, a speed sensor 88 is provided for the output shaft 33. Specifically, the speed sensor 88 is provided for a fourteenth gear 80 that rotates together with the output shaft 33. However, the speed sensor 88 may be provided for a rotating shaft except the output shaft 33, or may be provided for a further member that rotates at a predetermined rotating speed ratio relative to the output shaft 33.

### (Construction of engine unit 20)

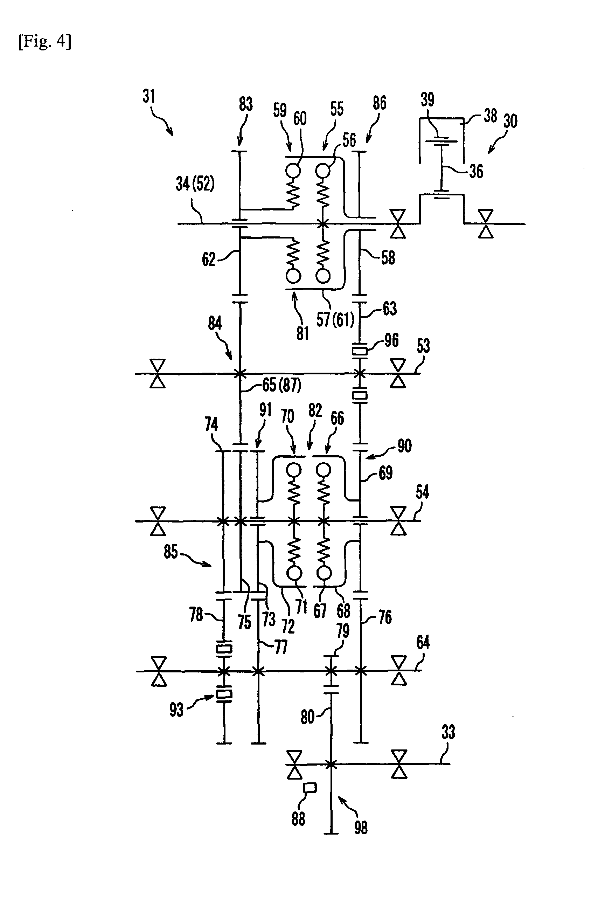

Fig. 2 is a cross sectional view showing the engine unit 20. Fig. 4 is a diagram representative of the construction of the engine unit 20. As shown in Fig. 2, the engine unit 20 comprises an engine 30 and a transmission 31. In addition, Embodiment 1 will be described with respect to an example, in which the engine 30 is a single cylinder engine. However, according to the invention, the engine 30 is not limited to a single cylinder engine. The engine 30 may be a multi-cylinder engine such as two cylinder engine, etc.

### - Engine 30 -

The engine 30 comprises a crank case 32, a cylinder body 37, a cylinder head 40, and a crank shaft 34. A crank chamber 35 is compartmented and formed in the crank case 32. A cylinder 38 opened to the crank chamber 35 is compartmented and formed in the cylinder body 37. The cylinder head 40 is mounted to a tip end of the cylinder body 37. The crank shaft 34 extending in a vehicle width direction is arranged in the crank chamber 35. A connecting rod 36 is mounted to the crank shaft 34. A piston 39 arranged in the cylinder 38 is mounted to a tip end of the connecting rod 36. A combustion chamber 41 is compartmented and formed by the piston 39, the cylinder body 37, and the cylinder head 40. An ignition plug 42 is mounted to the cylinder head 40 so as to have an ignition portion at a tip end thereof positioned in the combustion chamber 41.

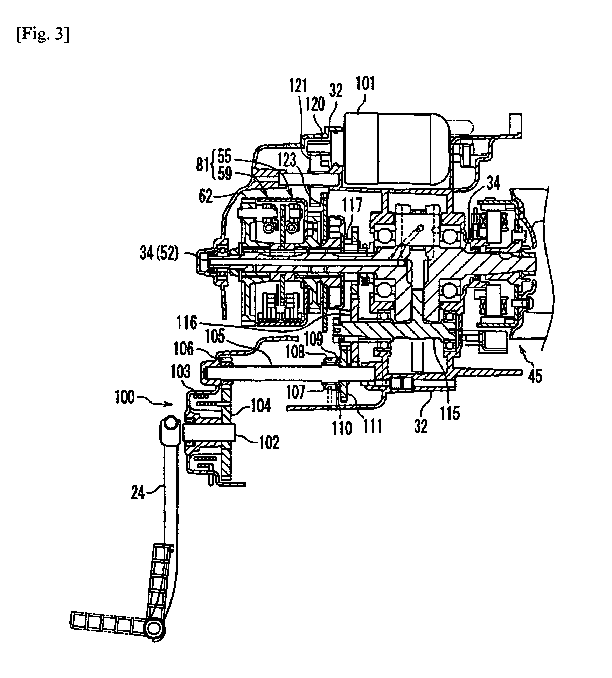

Fig. 3 is a partial, cross sectional view showing the engine unit 20 representative of a kick starter 100 and a sel-motor 101. As shown in Figs. 1 and 3, the kick starter 100 is provided on the engine unit 20. A rider of the scooter type vehicle 1 operates the kick starter 100 to enable starting the engine 30.

The kick starter 100 includes a kick pedal 24. As shown in Fig. 1, the kick pedal 24 is arranged rearwardly and upwardly of the crank shaft 34 and leftwardly of the crank case 32. As shown in Fig. 3, the kick pedal 24 is mounted to a kick shaft 102. A compression coil spring 103 is provided between the kick shaft 102 and the crank case 32. The compression coil spring 103 exerts a bias in a direction of reverse rotation to the kick shaft 102 rotated by the operation by a rider. Also, a gear 104 is provided on the kick shaft 102. On the other hand, a gear 106 is provided non-rotatably on a shaft 105. The gear 104 meshes with the gear 106. Rotation of the kick shaft 102 is transmitted to the crank shaft 34 through the gear 104, etc.

A ratchet 107 is formed on the shaft 105. A ratchet 108 is mounted to that portion of the shaft 105, on which the ratchet 107 is formed. When the shaft 105 rotates, the ratchet 108 is guided by the ratchet 107 to move axially rightwardly of the shaft 105. On the other hand, when the shaft 105 is rotated by the bias of the compression coil spring 103 in a reverse direction, the ratchet 108 is guided by the ratchet 107 to move axially leftwardly of the shaft 105.

An engaging portion 109 is formed on a right end surface of the ratchet 108. On the other hand, an engaging portion 110 is formed on a left end surface of a gear 111 provided rotatably on the shaft 105. The engaging portion 109 of the ratchet 108 engages with the engaging portion 110 when the ratchet 108 moves rightward. Thereby, when the ratchet 108 moves rightward, rotation of the shaft 105 is transmitted to the gear 111. The gear 111 meshes with a gear 116 formed on a balancer shaft 115. Also, the gear 116 meshes with a gear 117 formed on the crank shaft 34. Thereby, rotation of the gear 111 is transmitted to the crank shaft 34 through the balancer shaft 115. Accordingly, when the kick pedal 24 is operated, the crank shaft 34 rotates and the engine 30 is started.

In addition, the kick shaft 102 extends centrally of the vehicle to straddle the transmission 31 as viewed in plan view. That is, as shown in Fig. 3, the kick shaft 102 extends centrally of the vehicle from the left in the vehicle width direction and is arranged to align vertically with a part of the transmission 31.

Also, the sel-motor 101 is also provided on the engine 30. The sel-motor 101 is mounted to the crank case 32. Rotation of the sel-motor 101 is transmitted to the crank shaft 34 through gears 120, 121, and 122. Thereby, the sel-motor 101 is driven by the operation by a rider whereby the engine 30 is started.

### - Generator 45 -

A generator cover 43 is mounted on the right of the crank case 32. A generator chamber 44 is compartmented and formed by the generator cover 43 and the crank case 32.

A right end of the crank shaft 34 projects from the crank chamber 35 to extend into the generator chamber 44. A generator 45 is mounted to a right end of the crank shaft 34 in the generator chamber 44. The generator 45 comprises an inner 45a and an outer 45b. The inner 45a is mounted non-rotatably to the crank case 32. On the other hand, the outer 45b is mounted to the right end of the crank shaft 34. The outer 45b rotates together with the crank shaft 34. Therefore, when the crank shaft 34 rotates, the outer 45b rotates relative to the inner 45a. Thereby, electricity is generated. In addition, a fan 46 is provided on the outer 45b. The fan 46 rotates together with the crank shaft 34 to cool the engine 30.

A transmission cover 50 is mounted on the left of the crank case 32. A transmission chamber 51 positioned on the left of the crank case 32 is compartmented and formed by the transmission cover 50 and the crank case 32.

### - Construction of transmission 31 -

Subsequently, referring mainly to Fig. 4, an explanation will be given to the construction of the transmission 31. The transmission 31 is a stepped automatic transmission of 4-speed including an input shaft 52 and the output shaft 33. The transmission 31 is a so-called gear train type stepped transmission, in which power is transmitted through a plurality of transmission gear pairs to the output shaft 33 from the input shaft 52.

As shown in Fig. 2, a left end of the crank shaft 34 projects from the crank chamber 35 to extend into the transmission chamber 51. The crank shaft 34 serves also as the input shaft 52 of the transmission 31.

### - Construction of rotating shaft -

The transmission 31 includes a first rotating shaft 53, a second rotating shaft 54, a third rotating shaft 64, and an output shaft 33. The first rotating shaft 53, the second rotating shaft 54, the third rotating shaft 64, and the output shaft 33, respectively, are arranged in parallel to the input shaft 52.

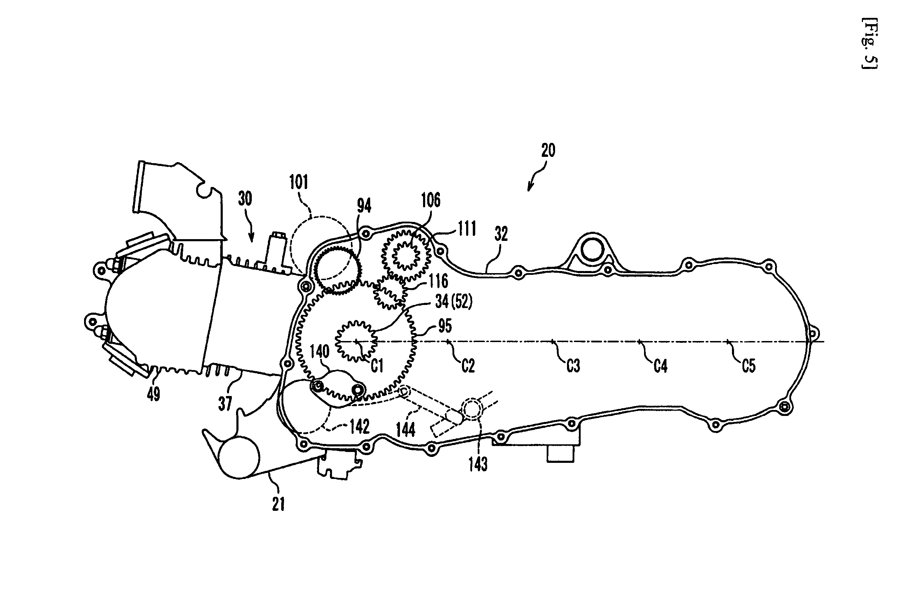

In Fig. 5, the characters C1, C2, C3, C4, and C5, respectively, denotes an axis of the input shaft 52, an axis of the first rotating shaft 53, an axis of the second rotating shaft 54, an axis of the third rotating shaft 64, and an axis of the output shaft 33. As shown in Fig. 5, the input shaft 52, the first rotating shaft 53, the second rotating shaft 54, the third rotating shaft 64, and the output shaft 33 are aligned in a substantially horizontal direction perpendicular to an axial direction of the input shaft 52. More specifically, the axis C1 of the input shaft 52, the axis C2 of the first rotating shaft 53, the axis C3 of the second rotating shaft 54, the axis C4 of the third rotating shaft 64, and the axis C5 of the output shaft 33 are aligned on a substantially horizontal, straight line as viewed in side view. The distance between the input shaft 52 and the output shaft 33 can be comparatively prolonged by arranging each of the rotating shafts as described above. In addition, in Fig. 5, the reference numeral 94 denotes an idle gear. The reference numeral 95 denotes a starter one-way gear.

In addition, Embodiment 1 will be described with respect to an example, in which the output shaft 33 and the third rotating shaft 64, respectively, are provided separately. However, the invention is not limited to the construction. The output shaft 33 and the third rotating shaft 64 may be common to each other. In other words, the rear wheel 18 may be mounted to the third rotating shaft 64.

### - Upstream clutch group 81 -

An upstream clutch group 81 is provided on the input shaft 52. The upstream clutch group 81 comprises a first clutch 55 and a second clutch 59. The first clutch 55 is arranged rightwardly of the second clutch 59. The first clutch 55 and the second clutch 59, respectively, comprise a centrifugal clutch. Specifically, in Embodiment 1, the first clutch 55 and the second clutch 59, respectively, comprise a drum type centrifugal clutch. However, the invention is not limited to the construction. The second clutch 59 may comprise a clutch except a centrifugal clutch. For example, the second clutch 59 may comprise a hydraulic type clutch.

The first clutch 55 comprises an inner 56 as an input side clutch member and an outer 57 as an output side clutch member. The inner 56 is provided to be non-rotatable relative to the input shaft 52. Therefore, the inner 56 rotates together with rotation of the input shaft 52. On the other hand, the outer 57 is rotatable relative to the input shaft 52. When the rotating speed of the input shaft 52 becomes larger than a predetermined rotating speed, a centrifugal force acting on the inner 56 causes the inner 56 to contact with the outer 57. Thereby, the first clutch 55 is connected. On the other hand, when the rotating speed becomes smaller than the predetermined rotating speed in the case where the inner 56 and the outer 57 rotate in a connected state, a centrifugal force acting on the inner 56 decreases, so that the inner 56 and the outer 57 separate from each other. Thereby, the first clutch 55 is disconnected.

The second clutch 59 comprises an inner 60 as an output side clutch member and an outer 61 as an input side clutch member. The inner 60 is provided to be non-rotatable relative to an eleventh gear 62 described later. When the input shaft 52 rotates, its rotation is transmitted through a first transmission gear pair 86, the first rotating shaft 53, and a fourth transmission gear pair 83 to the inner 60. Therefore, the inner 60 rotates together with rotation of the input shaft 52. The outer 61 is rotatable relative to the input shaft 52. When the rotating speed of the input shaft 52 becomes larger than a predetermined rotating speed, a centrifugal force acting on the inner 60 causes the inner 60 to contact with the outer 61. Thereby, the second clutch 59 is connected. On the other hand, when the rotating speed becomes smaller than the predetermined rotating speed in the case where the inner 60 and the outer 61 rotate in a connected state, a centrifugal force acting on the inner 60 decreases, so that the inner 60 and the outer 61 separate from each other. Thereby, the second clutch 59 is disconnected.

In addition, according to Embodiment 1, the outer 57 and the outer 61 are formed from the same member. However, the invention is not limited to the construction. The outer 57 and the outer 61 may be formed from separate members.

The rotating speed of the input shaft 52 when the first clutch 55 is connected is different from the rotating speed of the input shaft 52 when the second clutch 59 is connected. In other words, the rotating speed of the inner 56 when the first clutch 55 is connected is different from the rotating speed of the inner 60 when the second clutch 59 is connected. Specifically, the rotating speed of the input shaft 52 when the first clutch 55 is connected is smaller than the rotating speed of the input shaft 52 when the first clutch 55 is connected. Stated more specifically, the first clutch 55 is connected when the rotating speed of the input shaft 52 is at least a first rotating speed. On the other hand, the first clutch 55 is put in a disconnected state when the rotating speed of the input shaft 52 is less than the first rotating speed. The second clutch 59 is connected when the rotating speed of the input shaft 52 is at least a second rotating speed, which is higher than the first rotating speed. On the other hand, the second clutch 59 is put in a disconnected state when the rotating speed of the input shaft 52 is less than the second rotating speed.

A first gear 58 is provided on the outer 57 of the first clutch 55 to be non-rotatable relative to the outer 57. The first gear 58 rotates together with the outer 57 of the first clutch 55. On the other hand, a second gear 63 is provided on the first rotating shaft 53. The second gear 63 meshes with the first gear 58. The first gear 58 and the second gear 63 constitute the first transmission gear pair 86. According to the embodiment, the first transmission gear pair 86 constitutes a transmission gear pair of 1-speed.

The second gear 63 is a so-called one-way gear. Specifically, the second gear 63 transmits rotation of the first gear 58 to the first rotating shaft 53. On the other hand, the second gear 63 does not transmit rotation of the first rotating shaft 53 to the input shaft 52. That is, the second gear 63 serves as a one-way rotation transmitting mechanism 96.

The eleventh gear 62 is provided on the inner 60 as an output side clutch member of the second clutch 59. The eleventh gear 62 rotates together with the inner 60. On the other hand, a twelfth gear 65 is provided on the first rotating shaft 53. The twelfth gear 65 meshes with the eleventh gear 62. The twelfth gear 65 and the eleventh gear 62 constitute the fourth transmission gear pair 83. The fourth transmission gear pair 83 has a different gear ratio from that of the first transmission gear pair 86. Specifically, the fourth transmission gear pair 83 has a smaller gear ratio from that of the first transmission gear pair 86. The fourth transmission gear pair 83 constitutes a transmission gear pair of 2-speed.

The first clutch 55 and the second clutch 59 are positioned between the first transmission gear pair 86 and the fourth transmission gear pair 83. In other words, the first clutch 55 and the second clutch 59 are arranged between the first transmission gear pair 86 and the fourth transmission gear pair 83.

According to the embodiment, the twelfth gear 65 serves also as a ninth gear 87. In other words, the twelfth gear 65 and the ninth gear 87 are common to each other. A tenth gear 75 is provided on the second rotating shaft 54 to be non-rotatable relative to the second rotating shaft 54. The tenth gear 75 rotates together with the second rotating shaft 54. The ninth gear 87 functioning also as the twelfth gear 65 meshes with the tenth gear 75. The ninth gear 87 functioning also as the twelfth gear 65, and the tenth gear 75 constitutes a first transmission gear pair 84.

A seventh gear 74 is provided on the second rotating shaft 54 to be non-rotatable relative to the second rotating shaft 54. The seventh gear 74 rotates together with the second rotating shaft 54. On the other hand, an eighth gear 78 is provided on the third rotating shaft 64 to be non-rotatable relative to the third rotating shaft 64. The third rotating shaft 64 rotates together with the eighth gear 78. The seventh gear 74 and the eighth gear 78 mesh with each other. The seventh gear 74 and the eighth gear 78 constitute a second transmission gear pair 85.

The eighth gear 78 is a so-called one-way gear. Specifically, the eighth gear 78 transmits rotation of the second rotating shaft 54 to the third rotating shaft 64. On the other hand, the eighth gear 78 does not transmit rotation of the third rotating shaft 64 to the second rotating shaft 54. That is, the eighth gear 78 serves as a one-way rotation transmitting mechanism 93.

However, according to the invention, it is not essential that the eighth gear 78 is a so-called one-way gear. For example, the eighth gear 78 may be made an ordinary gear and the seventh gear 74 may be made a so-called one-way gear. In other words, the seventh gear 74 may serve as a one-way rotation transmitting mechanism. Specifically, the seventh gear 74 may transmit rotation of the second rotating shaft 54 to the eighth gear 78 but may not transmit rotation of the eighth gear 78 to the second rotating shaft 54.

### - Downstream clutch group 82 -

A downstream clutch group 82 is provided on the second rotating shaft 54. The downstream clutch group 82 is arranged rightwardly of the upstream clutch group 81. As shown in Fig. 2, the downstream clutch group 82 and the upstream clutch group 81 are arranged in positions, in which the both groups partially overlap each other in an axial direction of the input shaft 52. In other words, the downstream clutch group 82 and the upstream clutch group 81 are arranged in positions, in which the both groups at least partially overlap each other in the vehicle width direction. Specifically, the downstream clutch group 82 and the upstream clutch group 81 are arranged in positions, in which the both groups substantially overlap each other.

The downstream clutch group 82 comprises a third clutch 70 and a fourth clutch 66. The fourth clutch 66 is arranged rightwardly of the third clutch 70. Therefore, a direction, in which the first clutch 55 is positioned relative to the second clutch 59, and a direction, in which the fourth clutch 66 is positioned relative to the third clutch 70, are equal to each other. As shown in Fig. 2, the first clutch 55 and the fourth clutch 66 are arranged to at least partially overlap each other in the vehicle width direction. In other words, the first clutch 55 and the fourth clutch 66 are arranged to at least partially overlap each other in the axial direction of the input shaft 52. On the other hand, both the second clutch 59 and the third clutch 70 are arranged to at least partially overlap each other in the vehicle width direction. In other words, the second clutch 59 and the third clutch 70 are arranged to at least partially overlap each other in the axial direction of the input shaft 52. Specifically, the first clutch 55 and the fourth clutch 66 are arranged to substantially overlap each other in the vehicle width direction. On the other hand, both the second clutch 59 and the third clutch 70 are arranged to substantially overlap each other in the vehicle width direction.

In the embodiment, the third clutch 70 and the fourth clutch 66, respectively, comprise a so-called hydraulic type clutch. Specifically, according to Embodiment 1, the third clutch 70 and the fourth clutch 66, respectively, comprise a disk type hydraulic type clutch. However, the invention is not limited to the construction. The fourth clutch 66 and the third clutch 70 may comprise a clutch except a hydraulic type clutch. For example, the fourth clutch 66 and the third clutch 70 may comprise a centrifugal clutch. However, the fourth clutch 66 and the third clutch 70 preferably comprise a hydraulic clutch.

In this manner, according to the invention, it suffices that the first clutch 55 comprise a centrifugal clutch and at least one of the second clutch 59, the third clutch 70, and the fourth clutch 66 comprise a hydraulic clutch. As far as it goes, the second clutch 59, the third clutch 70, and the fourth clutch 66 may comprise a drum type or a disk type centrifugal clutch, or a drum type or a disk type hydraulic clutch. However, two or more of the second clutch 59, the third clutch 70, and the fourth clutch 66 preferably comprise a hydraulic clutch. In particular, preferably, the second clutch 59 comprises a centrifugal clutch, and the third clutch 70 and the fourth clutch 66 comprise a hydraulic clutch. Preferably, the third clutch 70 and the fourth clutch 66, which comprise a hydraulic clutch, are arranged on the same rotating shaft, and the first clutch 55 and the second clutch 59, which comprise a centrifugal clutch, are arranged on a separate rotating shaft.

In addition, "centrifugal clutch" referred to in the specification of the present application means a clutch, which includes an input side clutch member and an output side clutch member and in which the input side clutch member and the output side clutch member engage with each other to be connected to each other when the rotating speed of the input side clutch member is at least a predetermined rotating speed and the input side clutch member and the output side clutch member separate from each other to be disconnected from each other when the rotating speed of the input side clutch member is less than the predetermined rotating speed.

The rotating speed of the second rotating shaft 54 when the third clutch 70 is connected is different from the rotating speed of the second rotating shaft 54 when the fourth clutch 66 is connected. In other words, the rotating speed of an inner 71 when the third clutch 70 is connected is different from the rotating speed of an inner 67 when the fourth clutch 66 is connected. Specifically, the rotating speed of the second rotating shaft 54 when the third clutch 70 is connected is lower than the rotating speed of the second rotating shaft 54 when the fourth clutch 66 is connected.

The third clutch 70 comprises the inner 71 as an input side clutch member and an outer 72 as an output side clutch member. The inner 71 is provided to be non-rotatable relative to the second rotating shaft 54. Therefore, the inner 71 rotates together with rotation of the second rotating shaft 54. On the other hand, the outer 72 is rotatable relative to the second rotating shaft 54. In a state, in which the third clutch 70 is not connected, when the second rotating shaft 54 rotates, the inner 71 rotates together with the second rotating shaft 54 but the outer 72 does not rotate together with the second rotating shaft 54. In a state, in which the third clutch 70 is connected, both the inner 71 and the outer 72 rotate together with the second rotating shaft 54.

A fifth gear 73 is mounted to the outer 72 as an output side clutch member of the third clutch 70. The fifth gear 73 rotates together with the outer 72. On the other hand, a sixth gear 77 is provided on the third rotating shaft 64 to be non-rotatable relative to the third rotating shaft 64. The sixth gear 77 rotates together with the third rotating shaft 64. The fifth gear 73 and the sixth gear 77 mesh with each other. Therefore, rotation of the outer 72 is transmitted to the third rotating shaft 64 through the fifth gear 73 and the sixth gear 77.

The fifth gear 73 and the sixth gear 77 constitute a third transmission gear pair 91. The third transmission gear pair 91 has a different gear ratio from that of the first transmission gear pair 86, that of the fourth transmission gear pair 83, and that of a second transmission gear pair 90.

The third transmission gear pair 91 is positioned on the same side relative to the third clutch 70 as that side, on which the fourth transmission gear pair 83 is positioned relative to the second clutch 59. Specifically, the third transmission gear pair 91 is positioned leftwardly of the third clutch 70. Likewise, the fourth transmission gear pair 83 is also positioned leftwardly of the second clutch 59.

Also, the third transmission gear pair 91 and the fourth transmission gear pair 83 are arranged to at least partially overlap each other in the vehicle width direction. In other words, the third transmission gear pair 91 and the fourth transmission gear pair 83 are arranged to at least partially overlap each other in the axial direction of the input shaft 52. Specifically, the third transmission gear pair 91 and the fourth transmission gear pair 83 are arranged to substantially overlap each other in the vehicle width direction.

The fourth clutch 66 comprises the inner 67 as an input side clutch member and an outer 68 as an output side clutch member. The inner 67 is provided to be non-rotatable relative to the second rotating shaft 54. Therefore, the inner 67 rotates together with rotation of the second rotating shaft 54. On the other hand, the outer 68 is rotatable relative to the second rotating shaft 54. In a state, in which the fourth clutch 66 is not connected, when the second rotating shaft 54 rotates, the inner 67 rotates together with the second rotating shaft 54 but the outer 68 does not rotate together with the second rotating shaft 54. In a state, in which the fourth clutch 66 is connected, both the inner 67 and the outer 68 rotate together with the second rotating shaft 54.

A third gear 69 is mounted to the outer 68 as an output side clutch member of the fourth clutch 66. The third gear 69 rotates together with the outer 68. On the other hand, a fourth gear 76 is provided on the third rotating shaft 64 to be non-rotatable relative to the third rotating shaft 64. The fourth gear 76 rotates together with the third rotating shaft 64. The third gear 69 and the fourth gear 76 mesh with each other. Therefore, rotation of the outer 68 is transmitted to the third rotating shaft 64 through the third gear 69 and the fourth gear 76.

The fourth gear 76 and the third gear 69 constitute the second transmission gear pair 90. The second transmission gear pair 90 has a different gear ratio from that of the first transmission gear pair 86 and that of the fourth transmission gear pair 83.

The third clutch 70 and the fourth clutch 66 are positioned between the third transmission gear pair 91 and the second transmission gear pair 90. In other words, the third clutch 70 and the fourth clutch 66 are arranged between the third transmission gear pair 91 and the second transmission gear pair 90.

The second transmission gear pair 90 is positioned on the same side relative to the fourth clutch 66 as that side, on which the first transmission gear pair 86 is positioned relative to the first clutch 55. Specifically, the second transmission gear pair 90 is positioned rightwardly of the fourth clutch 66. Likewise, the first transmission gear pair 86 is also positioned rightwardly of the first clutch 55.

Also, the second transmission gear pair 90 and the first transmission gear pair 86 are arranged to at least partially overlap each other in the vehicle width direction. In other words, the second transmission gear pair 90 and the first transmission gear pair 86 are arranged to at least partially overlap each other in the axial direction of the input shaft 52. Specifically, the second transmission gear pair 90 and the first transmission gear pair 86 are arranged to substantially overlap each other in the vehicle width direction.

A thirteenth gear 79 is provided on the third rotating shaft 64 to be non-rotatable relative to the third rotating shaft 64. The thirteenth gear 79 is positioned leftwardly of the fourth gear 76 and the sixth gear 77 in the vehicle width direction. The thirteenth gear 79 rotates together with the third rotating shaft 64. On the other hand, the fourteenth gear 80 is provided on the output shaft 33 to be non-rotatable relative to the output shaft 33. In other words, the fourteenth gear 80 rotates together with the output shaft 33. The fourteenth gear 80 and the thirteenth gear 79 constitute a third transmission gear pair 98. The third transmission gear pair 98 transmits rotation of the third rotating shaft 64 to the output shaft 33.

### - Detailed construction of downstream clutch group 82 -

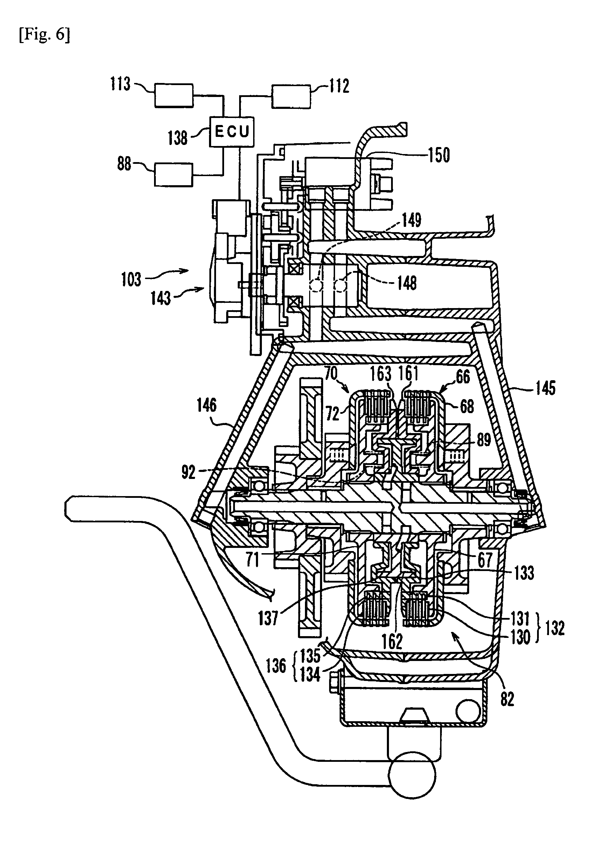

Subsequently, referring mainly to Figs. 6 to 8, an explanation will be given further in detail to the downstream clutch group 82.

A plate group 136 is provided on the third clutch 70. The plate group 136 comprises a plurality of friction plates 134 and a plurality of clutch plates 135. The plurality of friction plates 134 and the plurality of clutch plates 135 are laminated alternately in the vehicle width direction. The friction plates 134 are non-rotatable relative to the outer 72. On the other hand, the clutch plates 135 are non-rotatable relative to the inner 71.

The inner 71 is rotatable relative to the outer 72. A pressure plate 163 is arranged on an opposite side of the inner 71 to the outer 72 in the vehicle width direction. The pressure plate 163 is biased rightward in the vehicle width direction by a compression coil spring 92. That is, the pressure plate 163 is biased toward a boss portion 162 by the compression coil spring 92.

A working chamber 137 is compartmented and formed between the boss portion 162 and the pressure plate 163. The working chamber 137 is filled with an oil. When hydraulic pressure in the working chamber 137 increases, the pressure plate 163 is displaced in a direction away from the boss portion 162. Thereby, a distance between the pressure plate 163 and the inner 71 shortens. Accordingly, the plate group 136 is put in a state of mutual pressure contact. Consequently, the inner 71 and the outer 72 rotate together to put the third clutch 70 in a connected state.

On the other hand, when hydraulic pressure in the working chamber 137 decreases, the pressure plate 163 is displaced toward the boss portion 162 by the compression coil spring 92. Thereby, the state of pressure contact of the plate group 136 is released. Consequently, both the inner 71 and the outer 72 become able to rotate relative to each other to achieve disconnection of the third clutch 70.

In addition, while depiction is omitted, the third clutch 70 is formed with a minute leak hole, which is communicated to the working chamber 137. Also, sealing is not provided between the inner 71 and the outer 72. Thereby, when the clutch 70 is disconnected, it is possible to quickly discharge an oil in the working chamber 137. Therefore, according to the embodiment, it is possible to improve the clutch 70 in responsibility. Also, according to the embodiment, an oil scattered from a gap between the leak hole or the inner 71 and the outer 72 can smoothly lubricate other slide portions.

A plate group 132 is provided on the fourth clutch 66. The plate group 132 comprises a plurality of friction plates 130 and a plurality of clutch plates 131. The plurality of friction plates 130 and the plurality of clutch plates 131 are laminated alternately in the vehicle width direction. The friction plates 130 are non-rotatable relative to the outer 68. On the other hand, the clutch plates 131 are non-rotatable relative to the inner 67.

The inner 67 is rotatable relative to the outer 68 and capable of displacement thereto in the vehicle width direction. A pressure plate 161 is arranged on an opposite side of the inner 67 to the outer 68 in the vehicle width direction. The pressure plate 161 is biased leftward in the vehicle width direction by a compression coil spring 89. That is, the pressure plate 161 is biased toward the boss portion 162 by the compression coil spring 89.

A working chamber 133 is compartmented and formed between the boss portion 162 and the pressure plate 161. The working chamber 133 is filled with an oil. When hydraulic pressure in the working chamber 133 increases, the pressure plate 161 is displaced in a direction away from the boss portion 162. Thereby, a distance between the pressure plate 161 and the inner 67 shortens. Accordingly, the plate group 132 is put in a state of mutual pressure contact. Consequently, the inner 67 and the outer 68 rotate together to put the fourth clutch 66 in a connected state.

On the other hand, when hydraulic pressure in the working chamber 133 decreases, the pressure plate 161 is displaced toward the boss portion 162 by the compression coil spring 89. Thereby, the state of pressure contact of the plate group 132 is released. Consequently, both the inner 67 and the outer 68 become able to rotate relative to each other to achieve disconnection of the fourth clutch 66.

In addition, while depiction is omitted, the fourth clutch 66 is formed with a minute leak hole, which is communicated to the working chamber 133. Also, sealing is not provided between the inner 67 and the outer 68. Thereby, when the clutch 66 is disconnected, it is possible to quickly discharge an oil in the working chamber 133. Therefore, according to the embodiment, it is possible to improve the clutch 66 in responsibility. Also, according to the embodiment, an oil scattered from a gap between the leak hole or the inner 67 and the outer 68 can smoothly lubricate other slide portions.

### - Oil path 139-

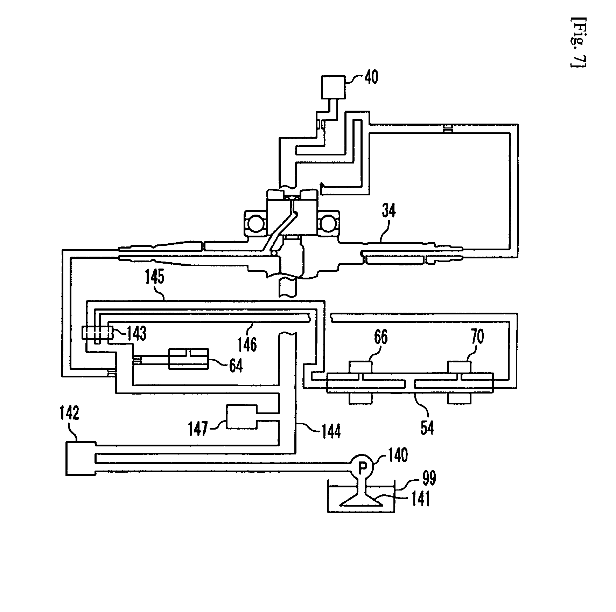

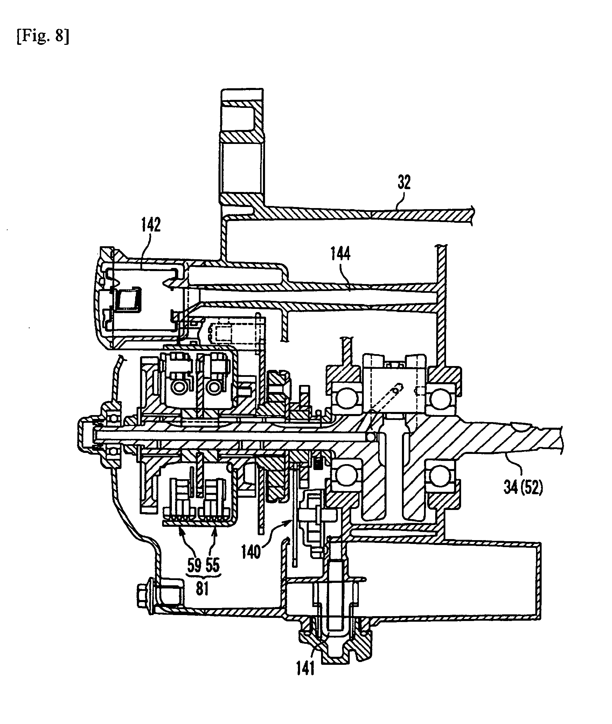

As shown in Fig. 7, pressure in the working chamber 133 of the fourth clutch 66 and pressure in the working chamber 137 of the third clutch 70 are given and regulated by an oil pump 140. As shown in Fig. 7, an oil reservoir 99 is formed at a bottom of the crank chamber 35. A strainer 141 shown also in Fig. 8 is immersed in the oil reservoir 99. The strainer 141 is connected to the oil pump 140. The oil pump 140 is driven, so that an oil stored in the oil reservoir 99 is sucked through the strainer 141.

A relief valve 147 is provided midway a first oil path 144. The oil as sucked is purified in an oil cleaner 142 and regulated to a predetermined pressure by the relief valve 147. Thereafter, a part of the purified oil is supplied to the crank shaft 34 and slide portions in the cylinder head 40. Also, a part of the purified oil is also supplied to the working chamber 133 of the fourth clutch 66 and the working chamber 137 of the third clutch 70. Specifically, a second oil path 145 and a third oil path 146 are connected to the first oil path 144 extending from the oil cleaner 142. The second oil path 145 passes on a side toward the crank case 32 from a valve 143 to extend into the second rotating shaft 54 from a right end of the second rotating shaft 54. The second oil path 145 extends to the working chamber 133. Therefore, an oil is supplied to the working chamber 133 via the second oil path 145 to regulate pressure in the working chamber 133. On the other hand, the third oil path 146 passes on a side toward the transmission cover 50 from the valve 143 to extend into the second rotating shaft 54 from a left end of the second rotating shaft 54. The third oil path 146 extends to the working chamber 137. Therefore, an oil is supplied to the working chamber 137 via the third oil path 146.

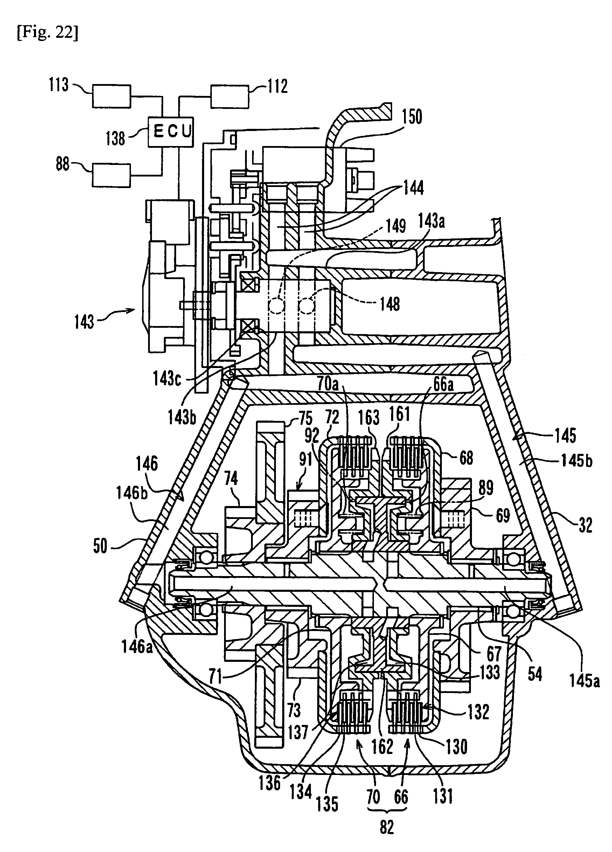

As shown in Fig. 22, the second oil path 145 includes a first rotating shaft side oil path 145a and a first case side oil path 145b. The first rotating shaft side oil path 145a extends leftward from the right end of the second rotating shaft 54. A left end of the first rotating shaft side oil path 145a is connected to the working chamber 133 of the fourth clutch 66. A right end of the first rotating shaft side oil path 145a is connected to the first case side oil path 145b. The first case side oil path 145b is formed on the crank case 32 shown in Fig. 2.

The third oil path 146 includes a second rotating shaft side oil path 146a and a second case side oil path 146b. The second rotating shaft side oil path 146a extends rightward from the left end of the second rotating shaft 54. A right end of the second rotating shaft side oil path 146a is connected to the working chamber 137 of the third clutch 70. A left end of the second rotating shaft side oil path 146a is connected to the second case side oil path 146b. The second case side oil path 146b is formed on the transmission cover 50 shown in Fig. 2.

In addition, the fourth clutch 66 in the embodiment corresponds to a first hydraulic clutch in the invention. The third clutch 70 corresponds to a second hydraulic clutch in the invention. The crank case 32 corresponds to a right case in the invention. The transmission cover 50 corresponds to a left case in the invention.

As shown in Fig. 7, the valve 143 is provided at a connection of the first oil path 144 to the second oil path 145 and the third oil path 146. The valve 143 opens and closes between the first oil path 144 and the third oil path 146 and opens and closes between the first oil path 144 and the second oil path 145.

As shown in Fig. 6, a motor 150 for driving of the valve 143 is mounted to the valve 143. The motor 150 drives the valve 143 to perform connection and disconnection between the third clutch 70 and the fourth clutch 66. That is, according to the embodiment, the oil pump 140, the valve 143, and the motor 150 constitute an actuator 103 that applies hydraulic pressure to the third clutch 70 and the fourth clutch 66, which comprise a hydraulic clutch. The actuator 103 is controlled by an ECU 138 shown in Fig. 6 to make the third clutch 70 and the fourth clutch 66 ON/OFF. Specifically, the actuator 103 appropriately applies hydraulic pressure to the working chamber 133 and the working chamber 137 whereby connection and disconnection of the third clutch 70 and the fourth clutch 66 are performed.

Stated more specifically, as shown in Fig. 6, a throttle opening degree sensor 112 and a speed sensor 88 are connected to the ECU 138. The ECU 138 as a control unit controls the actuator 103 on the basis of at least one of the throttle opening degree detected by the throttle opening degree sensor 112 and the car speed detected by the speed sensor 88 to control timing, in which the third clutch 70 and the fourth clutch 66 are connected. According to the embodiment, the ECU 138 as a control unit controls the actuator 103 on the basis of both the throttle opening degree detected by the throttle opening degree sensor 112 and the car speed detected by the speed sensor 88. Specifically, the ECU 138 controls the actuator 103 on the basis of information, which is obtained by applying the throttle opening degree detected by the throttle opening degree sensor 112 and the car speed detected by the speed sensor 88 to a V-N diagram read from a memory 113.

Specifically, the valve 143 is formed to be substantially columnar-shaped. The valve 143 is formed with an internal path 148 for communication of the first oil path 144 and the second oil path 145 and an internal path 149 for communication of the first oil path 144 and the third oil path 146. The valve 143 is turned by the motor 150 to cause the internal paths 148, 149 to select any one of a position, in which the first oil path 144 and the second oil path 145 are communicated to each other but the first oil path 144 and the third oil path 146 are disconnected from each other, a position, in which the first oil path 144 and the third oil path 146 are communicated to each other but the first oil path 144 and the second oil path 145 are disconnected from each other, and a position, in which the first oil path 144 and the third oil path 146 are disconnected from each other and the first oil path 144 and the second oil path 145 are disconnected from each other. Thereby, any one of a state, in which both the fourth clutch 66 and the third clutch 70 are disconnected, a state, in which the fourth clutch 66 is connected but the third clutch 70 is disconnected, or a state, in which the fourth clutch 66 is disconnected but the third clutch 70 is connected, is selected.

### - Operation of transmission 31 -

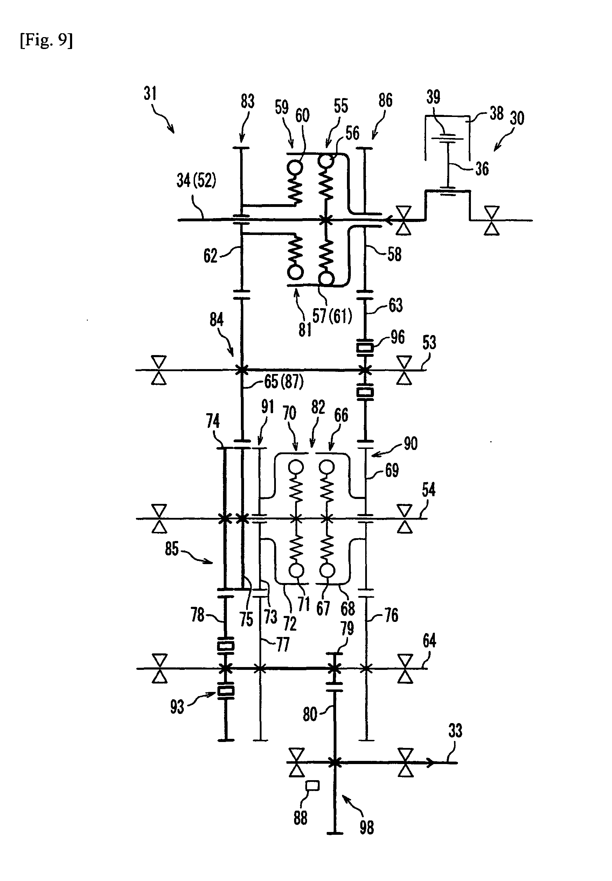

Subsequently, referring mainly to Figs. 9 to 12, an explanation will be given further in detail to the operation of the transmission 31.

### - At the starting, 1-speed-

First, when the engine 30 starts up, rotation of the crank shaft 34 (= the input shaft 52) begins. The inner 56 of the first clutch 55 rotates together with the input shaft 52. Therefore, when the rotating speed of the input shaft 52 becomes at least a predetermined rotating speed (= first rotating speed) and a centrifugal force of at least a predetermined magnitude begins to act on the inner 56, the first clutch 55 is connected as shown in Fig. 9. When the first clutch 55 is connected, the first transmission gear pair 86 rotates together with the outer 57 of the first clutch 55. Thereby, rotation of the input shaft 52 is transmitted to the first rotating shaft 53.

The ninth gear 87 rotates together with the first rotating shaft 53. Therefore, as the first rotating shaft 53 rotates, the first transmission gear pair 84 also rotates. Accordingly, rotation of the first rotating shaft 53 is transmitted to the second rotating shaft 54 through the first transmission gear pair 84.

The seventh gear 74 rotates together with the second rotating shaft 54. Therefore, as the second rotating shaft 54 rotates, the second transmission gear pair 85 also rotates. Accordingly, rotation of the second rotating shaft 54 is transmitted to the third rotating shaft 64 through the second transmission gear pair 85.

The thirteenth gear 79 rotates together with the third rotating shaft 64. Therefore, as the third rotating shaft 64 rotates, the third transmission gear pair 98 also rotates. Accordingly, rotation of the third rotating shaft 64 is transmitted to the output shaft 33 through the third transmission gear pair 98.

In this manner, when the scooter type vehicle 1 starts up, that is, at the time of 1-speed, rotation is transmitted to the output shaft 33 from the input shaft 52 through the first clutch 55, the first transmission gear pair 86, the first transmission gear pair 84, the second transmission gear pair 85, and the third transmission gear pair 98 as shown in Fig. 9.

### - 2-speed -

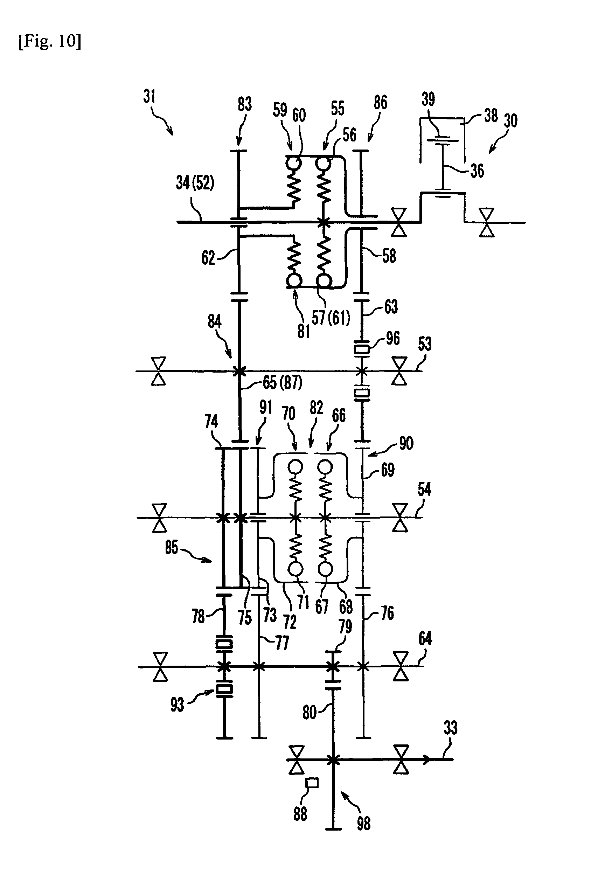

At the time of 1-speed, the twelfth gear 65 common to the ninth gear 87 rotates together with the first rotating shaft 53. Therefore, both the eleventh gear 62 in mesh with the twelfth gear 65 and the inner 60 of the second clutch 59 rotate. Accordingly, when the input shaft 52 is increased in rotating speed, the inner 60 of the second clutch 59 is also increased in rotating speed. When the rotating speed of the input shaft 52 becomes at least a second rotating speed being larger than the first rotating speed, the inner 60 is also increased correspondingly in rotating speed and the second clutch 59 is connected as shown in Fig. 10.

Here, according to the embodiment, the fourth transmission gear pair 83 is smaller in gear ratio than the first transmission gear pair 86. Accordingly, the twelfth gear 65 becomes larger in rotating speed than the second gear 63. Therefore, rotation of the input shaft 52 is transmitted to the first rotating shaft 53 through the fourth transmission gear pair 83. On the other hand, rotation of the first rotating shaft 53 is not transmitted to the input shaft 52 by the one-way rotation transmitting mechanism 96.

In the same manner as at the time of 1-speed, torque of the first rotating shaft 53 is transmitted to the output shaft 33 through the first transmission gear pair 84, the second transmission gear pair 85, and the third transmission gear pair 98.

In this manner, at the time of 2-speed, rotation is transmitted to the output shaft 33 from the input shaft 52 through the second clutch 59, the fourth transmission gear pair 83, the first transmission gear pair 84, the second transmission gear pair 85, and the third transmission gear pair 98 as shown in Fig. 10.

### - 3-speed -

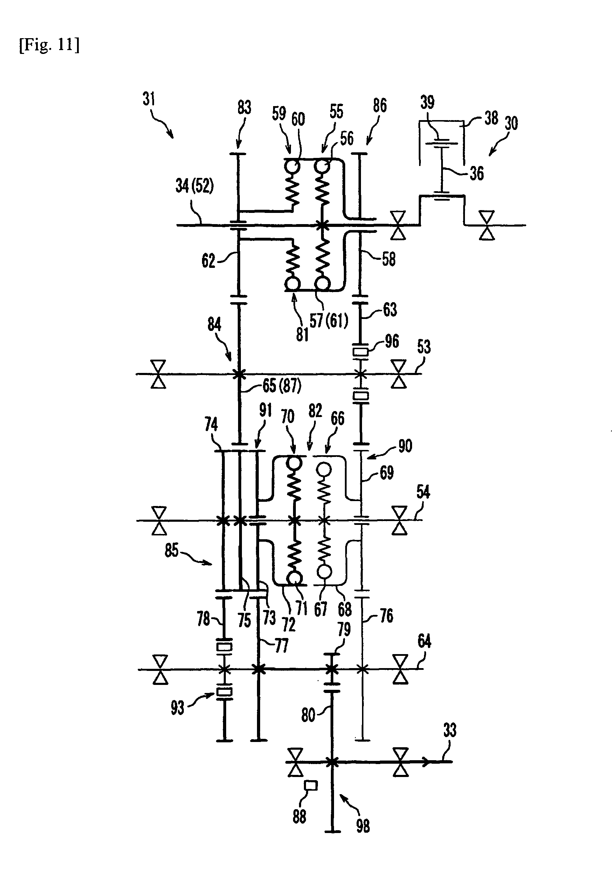

When at the time of 2-speed, the rotating speed of the crank shaft 34 (= the input shaft 52) becomes larger than the second rotating speed and the car speed become at least a predetermined car speed, the valve 143 is driven and the third clutch 70 is connected as shown in Fig. 11. Therefore, the third transmission gear pair 91 begins to rotate. Here, the third transmission gear pair 91 is smaller in gear ratio than the second transmission gear pair 85. Therefore, the sixth gear 77 of the third transmission gear pair 91 becomes larger in rotating speed than the eighth gear 78 of the fourth transmission gear pair 85. Therefore, rotation of the second rotating shaft 54 is transmitted to the third rotating shaft 64 through the third transmission gear pair 91. On the other hand, rotation of the third rotating shaft 64 is not transmitted to the second rotating shaft 54 by the one-way rotation transmitting mechanism 93.

In the same manner as at the time of 1-speed and 2-speed, rotation of the third rotating shaft 64 is transmitted to the output shaft 33 through the third transmission gear pair 98.

In this manner, at the time of 3-speed, rotation is transmitted to the output shaft 33 from the input shaft 52 through the second clutch 59, the fourth transmission gear pair 83, the first transmission gear pair 84, the third clutch 70, the third transmission gear pair 91, and the third transmission gear pair 98 as shown in Fig. 11.

### - 4-speed -

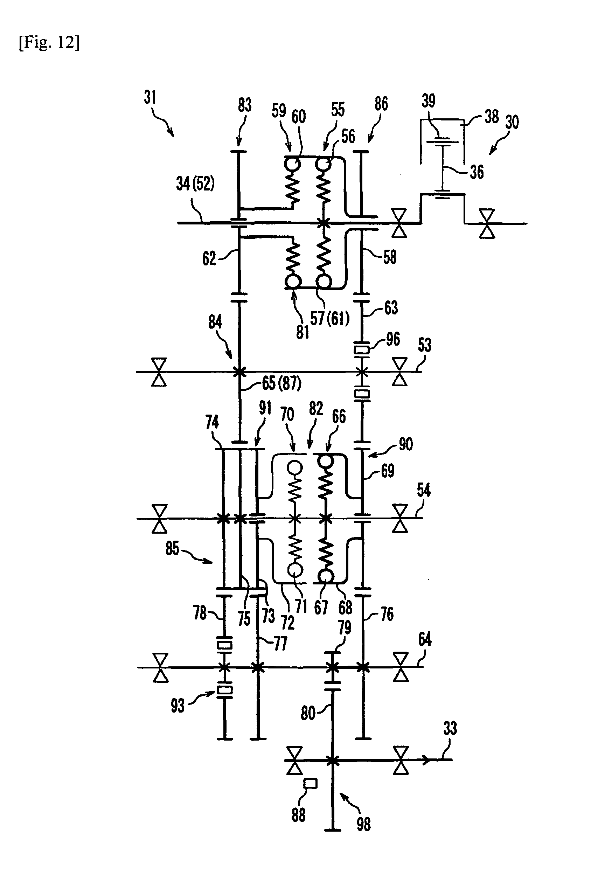

When at the time of 3-speed, the rotating speed of the crank shaft 34 (= the input shaft 52) becomes further large and the car speed become further large, the valve 143 is driven and the fourth clutch 66 is connected as shown in Fig. 12. On the other hand, the third clutch 70 is disconnected. Therefore, the second transmission gear pair 90 begins to rotate. Here, the second transmission gear pair 90 is also smaller in gear ratio than the second transmission gear pair 85. Therefore, the fourth gear 76 of the second transmission gear pair 90 becomes larger in rotating speed than the eighth gear 78 of the second transmission gear pair 85. Therefore, rotation of the second rotating shaft 54 is transmitted to the third rotating shaft 64 through the second transmission gear pair 90. On the other hand, rotation of the third rotating shaft 64 is not transmitted to the second rotating shaft 54 by the one-way rotation transmitting mechanism 93.

In the same manner as at the time of 1-speed to 3-speed, rotation of the third rotating shaft 64 is transmitted to the output shaft 33 through the third transmission gear pair 98.

In this manner, at the time of 4-speed, rotation is transmitted to the output shaft 33 from the input shaft 52 through the second clutch 59, the fourth transmission gear pair 83, the first transmission gear pair 84, the fourth clutch 66, the second transmission gear pair 90, and the third transmission gear pair 98 as shown in Fig. 12.

### «Embodiment 2»

Embodiment 1 has taken, as an example, the scooter type vehicle 1 to describe an example of a preferred embodiment, to which the invention is applied. However, in the invention, a motorcycle is not limited to a scooter type vehicle. In Embodiment 2, an example of a preferred embodiment, to which the invention is applied, is described taking, as an example, a so-called moped 2. In addition, in the description of Embodiment 2, members having common functions are denoted by common reference numerals in Embodiment 1. Figs. 4, 7, and 9 to 12 are referred to in common to Embodiment 1.

### (Outline construction of moped 2)

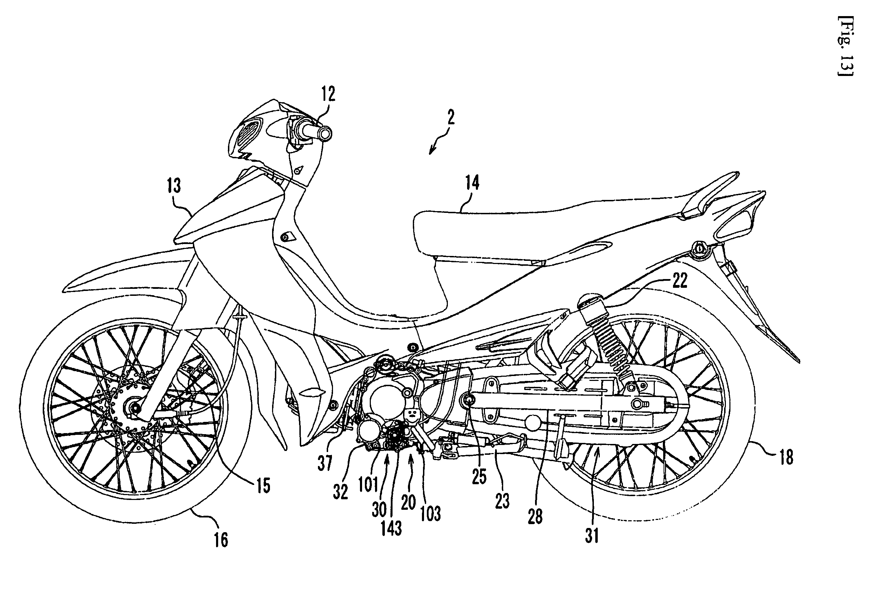

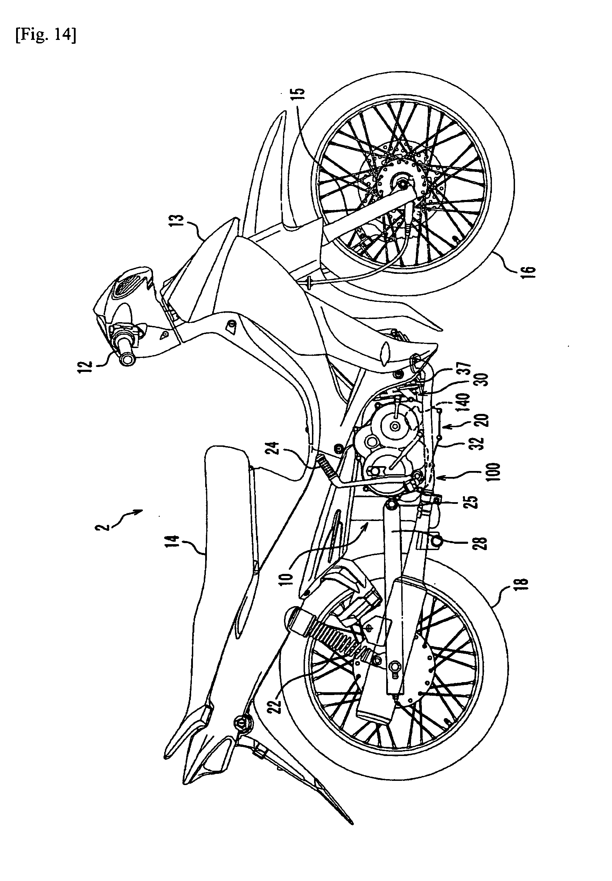

First, the outline construction of the moped 2 will be described with reference to Figs. 13 and 14. In addition, front and rear, and left and right directions in the following descriptions indicate ones as seen from a rider seated on a seat 14 of the moped 2.

As shown in Fig. 14, the moped 2 comprises a body frame 10. The body frame 10 includes a head pipe (not shown). The head pipe extends downward and a little obliquely forward on a front portion of the vehicle. A steering shaft (not shown) is inserted rotatably into the head pipe. A handle 12 is provided at an upper end of the steering shaft. On the other hand, a front fork 15 is connected to a lower end of the steering shaft. A front wheel 16 as a driven wheel is mounted rotatably to a lower end of the front fork 15.

A body cover 13 is mounted to the body frame 10. A part of the body frame 10 is covered by the body cover 13. A seat 14, on which a rider is seated, is mounted to the body cover 13. Also, a side stand 23 is mounted to the body frame 10 substantially centrally of the vehicle.

An engine unit 20 is suspended from the body frame 10. In the embodiment, the engine unit 20 is fixed to the body frame 10. That is, the engine unit 20 is a so-called rigid type engine unit. While the engine unit 20 according to Embodiment 1 is of a type being relatively long in a longitudinal direction, the engine unit 20 according to Embodiment 2 is of a type being relatively short in the longitudinal direction. Specifically, while the transmission 31 of the engine unit 20 in Embodiment 1 is of a type, in which a distance between the input shaft 52 and the output shaft 33 is relatively long, the transmission 31 of the engine unit 20 in Embodiment 2 is of a type, in which a distance between an input shaft 52 and an output shaft 33 is relatively short. Accordingly, the engine unit 20 in Embodiment 2 is especially useful in mopeds, off-road vehicles, on-road vehicles, etc., of which a relatively higher kinematical performance than that of a scooter type vehicle is demanded.

A rear arm 28 extending rearward is mounted to the body frame 10. The rear arm 28 can swing about a pivot shaft 25. A rear wheel 18 as a driving wheel is mounted rotatably to a rear end of the rear arm 28. The rear wheel 18 is connected to the output shaft 33 of the transmission 31 by power transmission means (not shown). Accordingly, the rear wheel 18 is driven by the engine unit 20. Also, one end of a cushion unit 22 is mounted to the rear end of the rear arm 28. The other end of the cushion unit 22 is mounted to the body frame 10. The cushion unit 22 restricts swinging of the rear arm 28.

As shown in Fig. 4, according to the embodiment, a speed sensor 88 is provided for the output shaft 33. Specifically, the speed sensor 88 is provided for a fourteenth gear 80 that rotates together with the output shaft 33. However, the speed sensor 88 may be provided for a rotating shaft except the output shaft 33, or may be provided for a further member that rotates at a predetermined rotating speed ratio relative to the output shaft 33.

### (Construction of engine unit 20)

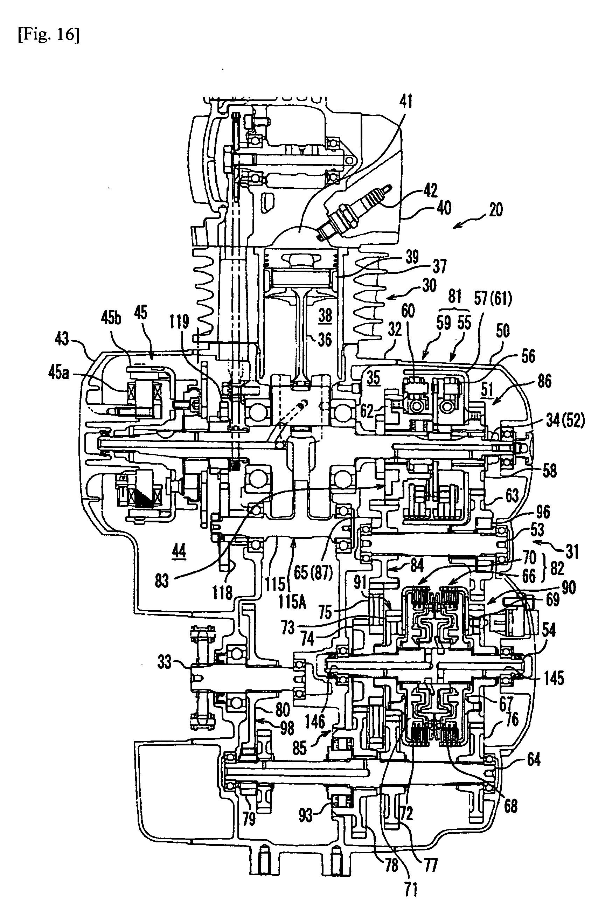

Fig. 16 is a cross sectional view showing the engine unit 20. Fig. 4 is a diagram representative of the construction of the engine unit 20. As shown in Fig. 16, the engine unit 20 comprises an engine 30 and a transmission 31. In addition, Embodiment 2 will be described with respect to an example, in which the engine 30 is a single cylinder engine. However, according to the invention, the engine 30 is not limited to a single cylinder engine. The engine 30 may be a multi-cylinder engine such as two cylinder engine, etc.

### - Engine 30 -

The engine 30 comprises a crank case 32, a cylinder body 37, a cylinder head 40, and a crank shaft 34. A crank chamber 35 is compartmented and formed in the crank case 32. A cylinder 38 opened to the crank chamber 35 is compartmented and formed in the cylinder body 37. The cylinder head 40 is mounted to a tip end of the cylinder body 37. The crank shaft 34 extending in a vehicle width direction is arranged in the crank chamber 35. A connecting rod 36 is mounted to the crank shaft 34. A piston 39 arranged in the cylinder 38 is mounted to a tip end of the connecting rod 36. A combustion chamber 41 is compartmented and formed by the piston 39, the cylinder body 37, and the cylinder head 40. An ignition plug 42 is mounted to the cylinder head 40 so that an ignition portion at a tip end thereof is positioned in the combustion chamber 41.

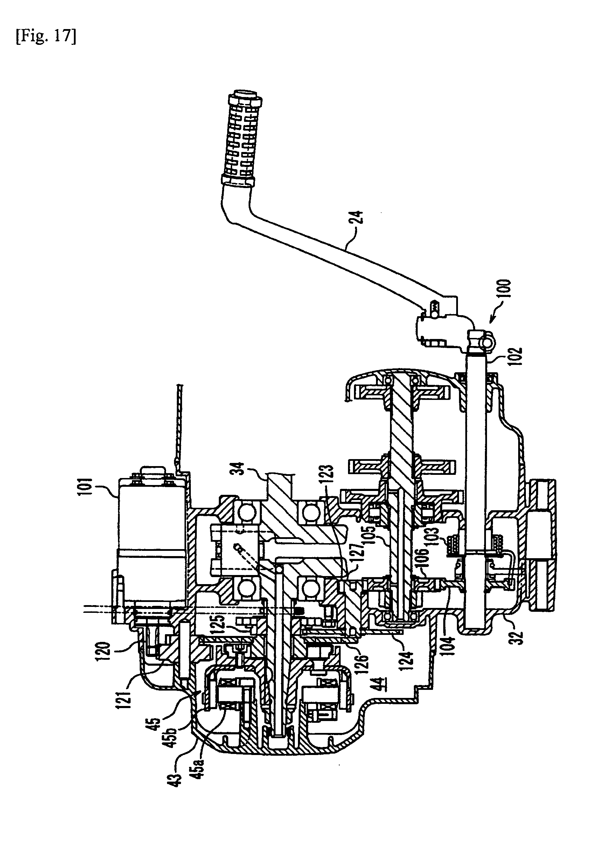

Fig. 17 is a partial, cross sectional view showing the engine unit 20 representative of a kick starter 100 and a sel-motor 101. As shown in Figs. 14 and 17, the kick starter 100 is provided on the engine unit 20. A rider of the moped 2 operates the kick starter 100 to enable starting the engine 30.

The kick starter 100 includes a kick pedal 24. As shown in Fig. 14, the kick pedal 24 is arranged rearwardly and downwardly of the crank shaft 34 and rightwardly of the crank case 32. The kick pedal 24 is mounted to a kick shaft 102. A compression coil spring 103 is provided between the kick shaft 102 and the crank case 32. The compression coil spring 103 exerts a bias in a direction of reverse rotation to the kick shaft 102 rotated by the operation by a rider. Also, a gear 104 is provided on the kick shaft 102. On the other hand, a gear 106 is provided rotatably on a shaft 105. The gear 104 meshes with the gear 106. Rotation of the kick shaft 102 is transmitted to the crank shaft 34 through the gear 104, etc. Also, the gear 106 meshes with a gear 123 provided on a shaft 127. Accordingly, rotation of the gear 104 is transmitted to the shaft 127 through the gear 106 and the gear 123. A gear 124 is provided on the shaft 127. The gear 124 meshes with a gear 125 provided on the crank shaft 34. Accordingly, rotation of the shaft 127 is transmitted to the crank shaft 34 through the gear 124 and the gear 125. Accordingly, a rider operates the kick pedal 24 whereby the crank shaft 34 rotates.

Also, the sel-motor 101 is also provided on the engine 30. The sel-motor 101 is mounted to the crank case 32. Rotation of the sel-motor 101 is transmitted to the crank shaft 34 through gears 120, 121, and 126. Thereby, the sel-motor 101 is driven by the operation by a rider whereby the engine 30 is started.

### - Balancer shaft 115 -

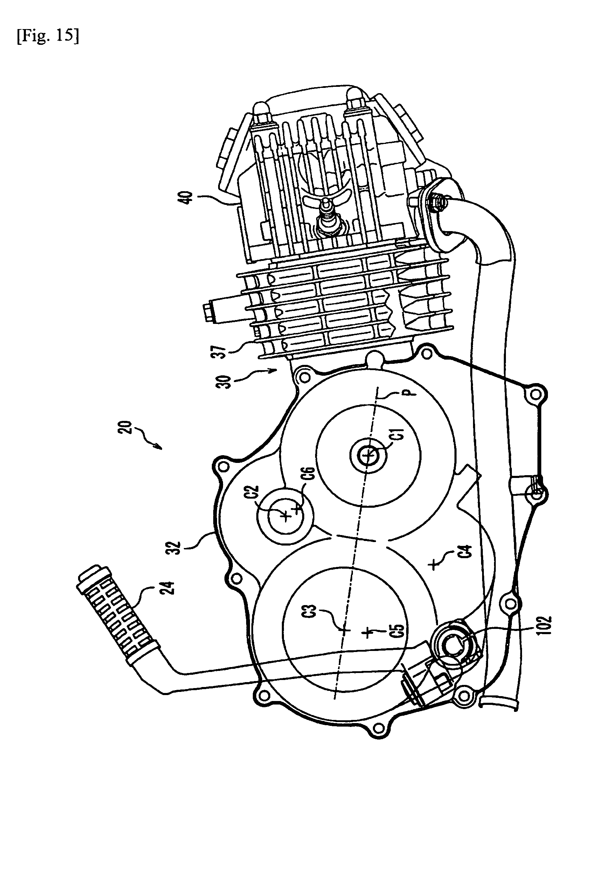

As shown in Fig. 16, a balancer 115A having a balancer shaft 115 is provided on the engine 30. A gear 118 is provided on the balancer shaft 115. The gear 118 meshes with a gear 119 provided on the crank shaft 34. Accordingly, the balancer shaft 115 rotates together with the crank shaft 34. As shown in Figs. 16 and 15, an axis C6 of the balancer shaft 115 is arranged close to an axis C2 of the second rotating shaft 54. As shown in Fig. 16, as viewed in an axial direction of a first rotating shaft 53, at least a part of the first rotating shaft 53, a second gear 63, or a ninth gear 87 and at least a part of the balancer 115A are arranged to overlap each other. Here, in particular, as viewed in the axial direction of the first rotating shaft 53, the balancer shaft 115 is arranged so that at least a part thereof overlaps the first rotating shaft 53. The balancer shaft 115 is positioned centrally of the crank shaft 34, to which the connecting rod 36 is connected. On the other hand, the first rotating shaft 53 is positioned rightward in a vehicle width direction. The balancer shaft 115 and the first rotating shaft 53 are made offset from each other in the vehicle width direction. In other words, the balancer shaft 115 and the first rotating shaft 53 are arranged not to overlap each other in the vehicle width direction.

### - Generator 45 -

As shown in Figs. 16 and 17, a generator cover 43 is mounted on the right of the crank case 32. A generator chamber 44 is compartmented and formed by the generator cover 43 and the crank case 32.

A left end of the crank shaft 34 projects from the crank chamber 35 to extend into the generator chamber 44. A generator 45 is mounted to a left end of the crank shaft 34 in the generator chamber 44. The generator 45 comprises an inner 45a and an outer 45b. The inner 45a is mounted non-rotatably to the crank case 32. On the other hand, the outer 45b is mounted to the left end of the crank shaft 34. The outer 45b rotates together with the crank shaft 34. Therefore, when the crank shaft 34 rotates, the outer 45b rotates relative to the inner 45a. Thereby, electricity is generated.

A transmission cover 50 is mounted on the right of the crank case 32. A transmission chamber 51 positioned on the left of the crank case 32 is compartmented and formed by the transmission cover 50 and the crank case 32.

### - Construction of transmission 31 -

Subsequently, referring mainly to Fig. 4, an explanation will be given to the construction of the transmission 31. The transmission 31 is a stepped automatic transmission of 4-speed including an input shaft 52 and the output shaft 33. The transmission 31 is a so-called gear train type stepped transmission, in which power is transmitted through a plurality of transmission gear pairs to the output shaft 33 from the input shaft 52.

A right end of the crank shaft 34 projects from the crank chamber 35 to extend into the transmission chamber 51. The crank shaft 34 serves also as the input shaft 52 of the transmission 31.

### - Construction of rotating shaft -

The transmission 31 includes a first rotating shaft 53, a second rotating shaft 54, a third rotating shaft 64, and an output shaft 33. The first rotating shaft 53, the second rotating shaft 54, the third rotating shaft 64, and the output shaft 33, respectively, are arranged in parallel to the input shaft 52.

In Fig. 15, the characters C1, C2, C3, C4, and C5, respectively, denotes an axis of the input shaft 52, an axis of the first rotating shaft 53, an axis of the second rotating shaft 54, an axis of the third rotating shaft 64, and an axis of the output shaft 33. As shown in Fig. 15, all the rotating shafts, that is, the input shaft 52, the first rotating shaft 53, the second rotating shaft 54, and the third rotating shaft 64 are arranged to adjoin one another as viewed in side view. In other words, the input shaft 52, the first rotating shaft 53, the second rotating shaft 54, and the third rotating shaft 64 are arranged so that the axis C1 of the input shaft 52, the axis C2 of the first rotating shaft 53, the axis C3 of the second rotating shaft 54, and the axis C4 of the third rotating shaft 64 define a rectangle.

As shown in Fig. 15, at least one of the axis C2 of the first rotating shaft 53 and the axis C4 of the third rotating shaft 64 is not positioned in a plane P including the axis C1 of the input shaft 52 and the axis C3 of the second rotating shaft 54. More specifically, while the axis C2 of the first rotating shaft 53 is positioned on one side of the plane P, the axis C4 of the third rotating shaft 64 is positioned on the other side of the plane P. Specifically, while the axis C2 of the first rotating shaft 53 is positioned above the plane P, the axis C4 of the third rotating shaft 64 is positioned below the plane P. Accordingly, the axis C2 of the first rotating shaft 53 is positioned on a relatively upper side and the third rotating shaft 64 is positioned on a relatively lower side.

The axis C4 of the third rotating shaft 64 is positioned forwardly of the axis C3 of the second rotating shaft 54 in a longitudinal direction. More specifically, the axis C4 of the third rotating shaft 64 is positioned between the axis C3 of the second rotating shaft 54 and the axis C1 of the input shaft 52 in the longitudinal direction.

The axis C5 of the output shaft 33 is positioned upwardly and rearwardly of the axis C4 of the third rotating shaft 64 as shown in Fig. 15. The axis C5 of the output shaft 33 is positioned outside an imaginary rectangle defined by the axis C1 of the input shaft 52, the axis C2 of the first rotating shaft 53, the axis C3 of the second rotating shaft 54, and the axis C4 of the third rotating shaft 64 as viewed in side view. The axis C5 of the output shaft 33 is positioned rearwardly of the axis C3 of the second rotating shaft 54 as viewed in side view.

In addition, the plane P extends rearward and upward. That is, the axis C3 of the second rotating shaft 54 is positioned in a higher position than the axis C1 of the input shaft 52.

In addition, Embodiment 2 will be described with respect to an example, in which the output shaft 33 and the third rotating shaft 64, respectively, are provided separately of each other. However, the invention is not limited to the construction. The output shaft 33 and the third rotating shaft 64 may be common to each other. In other words, the rear wheel 18 may be mounted to the third rotating shaft 64.

### - Upstream clutch group 81 -

As shown in Figs. 16 and 4, the upstream clutch group 81 is provided on the input shaft 52. The upstream clutch group 81 comprises the first clutch 55 and the second clutch 59. The first clutch 55 is arranged rightwardly of the second clutch 59. The first clutch 55 and the second clutch 59, respectively, comprise a centrifugal clutch. Specifically, according to Embodiment 1, the first clutch 55 and the second clutch 59, respectively, comprises a drum type centrifugal clutch. However, the invention is not limited to the construction. The second clutch 59 may comprise a clutch except a centrifugal clutch. For example, the second clutch 59 may comprise a hydraulic clutch.

The first clutch 55 comprises the inner 56 as an input side clutch member and the outer 57 as an output side clutch member. The inner 56 is mounted non-rotatably to the input shaft 52. Therefore, the inner 56 rotates together with rotation of the input shaft 52. On the other hand, the outer 57 is rotatable relative to the input shaft 52. When the rotating speed of the input shaft 52 becomes larger than a predetermined rotating speed, a centrifugal force acting on the inner 56 causes the inner 56 to contact with the outer 57. Thereby, the first clutch 55 is connected. On the other hand, when the rotating speed becomes smaller than the predetermined rotating speed in the case where the inner 56 and the outer 57 rotate in a connected state, a centrifugal force acting on the inner 56 decreases, so that the inner 56 and the outer 57 separate from each other. Thereby, the first clutch 55 is disconnected.

The second clutch 59 comprises an inner 60 as an output side clutch member and an outer 61 as an input side clutch member. The inner 60 is provided to be non-rotatable relative to an eleventh gear 62. When the input shaft 52 rotates, its rotation is transmitted through a first transmission gear pair 86, the first rotating shaft 53, and a fourth transmission gear pair 83 to the inner 60. Therefore, the inner 60 rotates together with rotation of the input shaft 52. The outer 61 is rotatable relative to the input shaft 52. When the rotating speed of the input shaft 52 becomes larger than a predetermined rotating speed, a centrifugal force acting on the inner 60 causes the inner 60 to contact with the outer 61. Thereby, the second clutch 59 is connected. On the other hand, when the rotating speed becomes smaller than the predetermined rotating speed in the case where the inner 60 and the outer 61 rotate in a connected state, a centrifugal force acting on the inner 60 decreases, so that the inner 60 and the outer 61 separate from each other. Thereby, the second clutch 59 is disconnected.

In addition, according to Embodiment 2, the outer 57 and the outer 61 are formed from the same member. However, the invention is not limited to the construction. The outer 57 and the outer 61 may be formed from separate members.

The rotating speed of the input shaft 52 when the first clutch 55 is connected is different from the rotating speed of the input shaft 52 when the second clutch 59 is connected. In other words, the rotating speed of the inner 56 when the first clutch 55 is connected is different from the rotating speed of the inner 60 when the second clutch 59 is connected. Specifically, the rotating speed of the input shaft 52 when the first clutch 55 is connected is smaller than the rotating speed of the input shaft 52 when the second clutch 59 is connected. Stated more specifically, the first clutch 55 is connected when the rotating speed of the input shaft 52 is at least a first rotating speed. On the other hand, the first clutch 55 is put in a disconnected state when the rotating speed of the input shaft 52 is less than the first rotating speed. The second clutch 59 is connected when the rotating speed of the input shaft 52 is at least a second rotating speed, which is higher than the first rotating speed. On the other hand, the second clutch 59 is put in a disconnected state when the rotating speed of the input shaft 52 is less than the second rotating speed.

A first gear 58 is provided on the outer 57 of the first clutch 55 to be non-rotatable relative to the outer 57. The first gear 58 rotates together with the outer 57 of the first clutch 55. On the other hand, a second gear 63 is provided on the first rotating shaft 53. The second gear 63 meshes with the first gear 58. The first gear 58 and the second gear 63 constitute the first transmission gear pair 86. According to the embodiment, the first transmission gear pair 86 constitutes a transmission gear pair of 1-speed.

The second gear 63 is a so-called one-way gear. Specifically, the second gear 63 transmits rotation of the first gear 58 to the first rotating shaft 53. On the other hand, the second gear 63 does not transmit rotation of the first rotating shaft 53 to the input shaft 52. That is, the second gear 63 serves as a one-way rotation transmitting mechanism 96.

The eleventh gear 62 is provided on the inner 60 as an output side clutch member of the second clutch 59. The eleventh gear 62 rotates together with the inner 60. On the other hand, a twelfth gear 65 is provided on the first rotating shaft 53. The twelfth gear 65 meshes with the eleventh gear 62. The twelfth gear 65 and the eleventh gear 62 constitute the fourth transmission gear pair 83. The fourth transmission gear pair 83 has a different gear ratio from that of the first transmission gear pair 86. Specifically, the fourth transmission gear pair 83 has a smaller gear ratio from that of the first transmission gear pair 86. The fourth transmission gear pair 83 constitutes a transmission gear pair of 2-speed.

The first clutch 55 and the second clutch 59 are positioned between the first transmission gear pair 86 and the fourth transmission gear pair 83. In other words, the first clutch 55 and the second clutch 59 are arranged between the first transmission gear pair 86 and the fourth transmission gear pair 83.

According to the embodiment, the twelfth gear 65 serves also as a ninth gear 87. In other words, the twelfth gear 65 and the ninth gear 87 are common to each other. A tenth gear 75 is provided on the second rotating shaft 54 to be non-rotatable relative to the second rotating shaft 54. The tenth gear 75 rotates together with the second rotating shaft 54. The ninth gear 87 functioning also as the twelfth gear 65 meshes with the tenth gear 75. The ninth gear 87 functioning also as the twelfth gear 65, and the tenth gear 75 constitutes a first transmission gear pair 84.

A seventh gear 74 is provided on the second rotating shaft 54 to be non-rotatable relative to the second rotating shaft 54. The seventh gear 74 rotates together with the second rotating shaft 54. On the other hand, an eighth gear 78 is provided on the third rotating shaft 64 to be non-rotatable relative to the third rotating shaft 64. The third rotating shaft 64 rotates together with the eighth gear 78. The seventh gear 74 and the eighth gear 78 mesh with each other. The seventh gear 74 and the eighth gear 78 constitute a second transmission gear pair 85.

The eighth gear 78 is a so-called one-way gear. Specifically, the eighth gear 78 transmits rotation of the second rotating shaft 54 to the third rotating shaft 64. On the other hand, the eighth gear 78 does not transmit rotation of the third rotating shaft 64 to the second rotating shaft 54. That is, the eighth gear 78 serves as a one-way rotation transmitting mechanism 93.

However, according to the invention, it is not essential that the eighth gear 78 is a so-called one-way gear. For example, the eighth gear 78 may be made an ordinary gear and the seventh gear 74 may be made a so-called one-way gear. In other words, the seventh gear 74 may serve as a one-way rotation transmitting mechanism. Specifically, the seventh gear 74 may transmit rotation of the second rotating shaft 54 to the eighth gear 78 but may not transmit rotation of the eighth gear 78 to the second rotating shaft 54.

### - Downstream clutch group 82 -

A downstream clutch group 82 is provided on the second rotating shaft 54. The downstream clutch group 82 is arranged rightwardly of the upstream clutch group 81. As shown in Fig. 16, the downstream clutch group 82 and the upstream clutch group 81 are arranged in positions, in which the both groups partially overlap each other in an axial direction of the input shaft 52. In other words, the downstream clutch group 82 and the upstream clutch group 81 are arranged in positions, in which the both groups at least partially overlap each other in the vehicle width direction. Specifically, the downstream clutch group 82 and the upstream clutch group 81 are arranged in positions, in which the both groups substantially overlap each other.

The downstream clutch group 82 comprises a third clutch 70 and a fourth clutch 66. The fourth clutch 66 is arranged rightwardly of the third clutch 70. Therefore, a direction, in which the first clutch 55 is positioned relative to the second clutch 59, and a direction, in which the fourth clutch 66 is positioned relative to the third clutch 70, are equal to each other. As shown in Fig. 16, the first clutch 55 and the fourth clutch 66 are arranged to at least partially overlap each other in the vehicle width direction. In other words, the first clutch 55 and the fourth clutch 66 are arranged to at least partially overlap each other in the axial direction of the input shaft 52. On the other hand, both the second clutch 59 and the third clutch 70 are arranged to at least partially overlap each other in the vehicle width direction. In other words, the second clutch 59 and the third clutch 70 are arranged to at least partially overlap each other in the axial direction of the input shaft 52. Specifically, the first clutch 55 and the fourth clutch 66 are arranged to substantially overlap each other in the vehicle width direction. On the other hand, both the second clutch 59 and the third clutch 70 are arranged to substantially overlap each other in the vehicle width direction.

In the embodiment, the third clutch 70 and the fourth clutch 66, respectively, comprise a so-called hydraulic type clutch. Specifically, according to Embodiment 1, the third clutch 70 and the fourth clutch 66, respectively, comprise a disk type hydraulic type clutch. However, the invention is not limited to the construction. The fourth clutch 66 and the third clutch 70 may comprise a clutch except a hydraulic type clutch. For example, the fourth clutch 66 and the third clutch 70 may comprise a centrifugal clutch. However, the fourth clutch 66 and the third clutch 70 preferably comprise a hydraulic clutch.

In this manner, according to the invention, it suffices that the first clutch 55 comprise a centrifugal clutch and at least one of the second clutch 59, the third clutch 70, and the fourth clutch 66 comprise a hydraulic clutch. As far as it goes, the second clutch 59, the third clutch 70, and the fourth clutch 66 may comprise a drum type or a disk type centrifugal clutch, or a drum type or a disk type hydraulic clutch. However, two or more of the second clutch 59, the third clutch 70, and the fourth clutch 66 preferably comprise a hydraulic clutch. In particular, preferably, the second clutch 59 comprises a centrifugal clutch, and the third clutch 70 and the fourth clutch 66 comprise a hydraulic clutch. Preferably, the third clutch 70 and the fourth clutch 66, which comprise a hydraulic clutch, are arranged on the same rotating shaft, and the first clutch 55 and the second clutch 59, which comprise a centrifugal clutch, are arranged on separate rotating shafts.

The rotating speed of the second rotating shaft 54 when the third clutch 70 is connected is different from the rotating speed of the second rotating shaft 54 when the fourth clutch 66 is connected. In other words, the rotating speed of an inner 71 when the third clutch 70 is connected is different from the rotating speed of an inner 67 when the fourth clutch 66 is connected. Specifically, the rotating speed of the second rotating shaft 54 when the third clutch 70 is connected is lower than the rotating speed of the second rotating shaft 54 when the fourth clutch 66 is connected.

The third clutch 70 comprises the inner 71 as an input side clutch member and an outer 72 as an output side clutch member. The inner 71 is provided to be non-rotatable relative to the second rotating shaft 54. Therefore, the inner 71 rotates together with rotation of the second rotating shaft 54. On the other hand, the outer 72 is rotatable relative to the second rotating shaft 54. In a state, in which the third clutch 70 is not connected, when the second rotating shaft 54 rotates, the inner 71 rotates together with the second rotating shaft 54 but the outer 72 does not rotate together with the second rotating shaft 54. In a state, in which the third clutch 70 is connected, both the inner 71 and the outer 72 rotate together with the second rotating shaft 54.

A fifth gear 73 is mounted to the outer 72 as an output side clutch member of the third clutch 70. The fifth gear 73 rotates together with the outer 72. On the other hand, a sixth gear 77 is provided on the third rotating shaft 64 to be non-rotatable relative to the third rotating shaft 64. The sixth gear 77 rotates together with the third rotating shaft 64. The fifth gear 73 and the sixth gear 77 mesh with each other. Therefore, rotation of the outer 72 is transmitted to the third rotating shaft 64 through the fifth gear 73 and the sixth gear 77.

The fifth gear 73 and the sixth gear 77 constitute a third transmission gear pair 91. The third transmission gear pair 91 has a different gear ratio from that of the first transmission gear pair 86, that of the fourth transmission gear pair 83, and that of a second transmission gear pair 90.

The third transmission gear pair 91 is positioned on the same side relative to the third clutch 70 as that side, on which the fourth transmission gear pair 83 is positioned relative to the second clutch 59. Specifically, the third transmission gear pair 91 is positioned leftwardly of the third clutch 70. Likewise, the fourth transmission gear pair 83 is also positioned leftwardly of the second clutch 59.

Also, the third transmission gear pair 91 and the fourth transmission gear pair 83 are arranged to at least partially overlap each other in the vehicle width direction. In other words, the third transmission gear pair 91 and the fourth transmission gear pair 83 are arranged to at least partially overlap each other in the axial direction of the input shaft 52. Specifically, the third transmission gear pair 91 and the fourth transmission gear pair 83 are arranged to substantially overlap each other in the vehicle width direction.

The fourth clutch 66 comprises the inner 67 as an input side clutch member and an outer 68 as an output side clutch member. The inner 67 is provided to be non-rotatable relative to the second rotating shaft 54. Therefore, the inner 67 rotates together with rotation of the second rotating shaft 54. On the other hand, the outer 68 is rotatable relative to the second rotating shaft 54. In a state, in which the fourth clutch 66 is not connected, when the second rotating shaft 54 rotates, the inner 67 rotates together with the second rotating shaft 54 but the outer 68 does not rotate together with the second rotating shaft 54. In a state, in which the fourth clutch 66 is connected, both the inner 67 and the outer 68 rotate together with the second rotating shaft 54.

A third gear 69 is mounted to the outer 68 as an output side clutch member of the fourth clutch 66. The third gear 69 rotates together with the outer 68. On the other hand, a fourth gear 76 is provided on the third rotating shaft 64 to be non-rotatable relative to the third rotating shaft 64. The fourth gear 76 rotates together with the third rotating shaft 64. The third gear 69 and the fourth gear 76 mesh with each other. Therefore, rotation of the outer 68 is transmitted to the third rotating shaft 64 through the third gear 69 and the fourth gear 76.

The fourth gear 76 and the third gear 69 constitute the second transmission gear pair 90. The second transmission gear pair 90 has a different gear ratio from that of the first transmission gear pair 86, that of the third transmission gear pair 91, and that of the fourth transmission gear pair 83.

The third clutch 70 and the fourth clutch 66 are positioned between the third transmission gear pair 91 and the second transmission gear pair 90. In other words, the third clutch 70 and the fourth clutch 66 are arranged between the third transmission gear pair 91 and the second transmission gear pair 90.

The second transmission gear pair 90 is positioned on the same side relative to the fourth clutch 66 as that side, on which the first transmission gear pair 86 is positioned relative to the first clutch 55. Specifically, the second transmission gear pair 90 is positioned rightwardly of the fourth clutch 66. Likewise, the first transmission gear pair 86 is also positioned rightwardly of the first clutch 55.

Also, the second transmission gear pair 90 and the first transmission gear pair 86 are arranged to at least partially overlap each other in the vehicle width direction. In other words, the second transmission gear pair 90 and the first transmission gear pair 86 are arranged to at least partially overlap each other in the axial direction of the input shaft 52. Specifically, the second transmission gear pair 90 and the first transmission gear pair 86 are arranged to substantially overlap each other in the vehicle width direction.

A thirteenth gear 79 is provided on the third rotating shaft 64 to be non-rotatable relative to the third rotating shaft 64. The thirteenth gear 79 is positioned leftwardly of the fourth gear 76 and the sixth gear 77 in the vehicle width direction. The thirteenth gear 79 rotates together with the third rotating shaft 64. On the other hand, the fourteenth gear 80 is provided on the output shaft 33 to be non-rotatable relative to the output shaft 33. In other words, the fourteenth gear 80 rotates together with the output shaft 33. The fourteenth gear 80 and the thirteenth gear 79 constitute a third transmission gear pair 98. The third transmission gear pair 98 transmits rotation of the third rotating shaft 64 to the output shaft 33.

### - Detailed construction of downstream clutch group 82 -

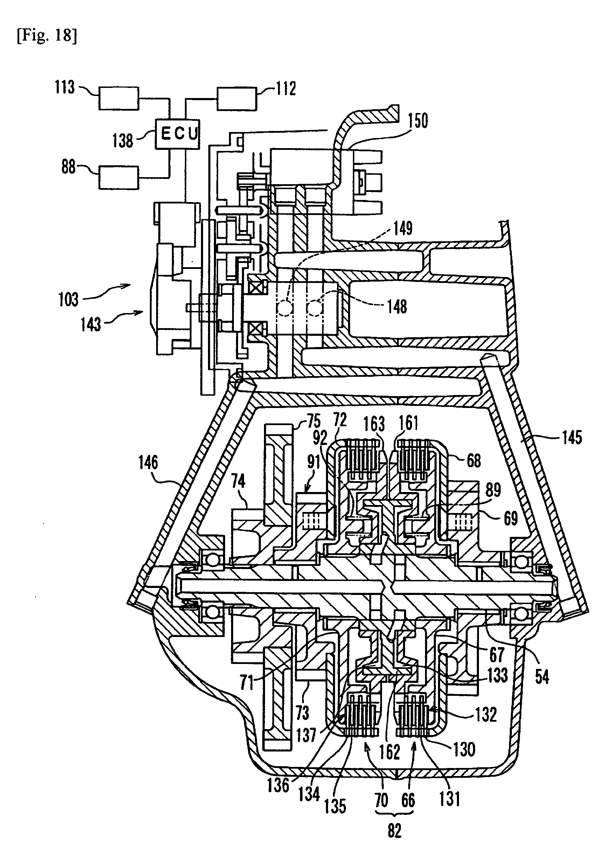

Subsequently, referring mainly to Fig. 18, an explanation will be given further in detail to the downstream clutch group 82.

A plate group 136 is provided on the third clutch 70. The plate group 136 comprises a plurality of friction plates 134 and a plurality of clutch plates 135. The plurality of friction plates 134 and the plurality of clutch plates 135 are laminated alternately in the vehicle width direction. The friction plates 134 are non-rotatable relative to the outer 72. On the other hand, the clutch plates 135 are non-rotatable relative to the inner 71.

The inner 71 is rotatable relative to the outer 72. A pressure plate 163 is arranged on an opposite side of the inner 71 to the outer 72 in the vehicle width direction. The pressure plate 163 is biased rightward in the vehicle width direction by a compression coil spring 92. That is, the pressure plate 163 is biased toward a boss portion 162 by the compression coil spring 92.

A working chamber 137 is compartmented and formed between the boss portion 162 and the pressure plate 163. The working chamber 137 is filled with an oil. When hydraulic pressure in the working chamber 137 increases, the pressure plate 163 is displaced in a direction away from the boss portion 162. Thereby, a distance between the pressure plate 163 and the inner 71 shortens. Accordingly, the plate group 136 is put in a state of mutual pressure contact. Consequently, the inner 71 and the outer 72 rotate together to put the third clutch 70 in a connected state.

On the other hand, when hydraulic pressure in the working chamber 137 decreases, the pressure plate 163 is displaced toward the boss portion 162 by the compression coil spring 92. Thereby, the state of pressure contact of the plate group 136 is released. Consequently, both the inner 71 and the outer 72 become able to rotate relative to each other to achieve disconnection of the third clutch 70.

In addition, while depiction is omitted, the third clutch 70 is formed with a minute leak hole, which is communicated to the working chamber 137. Also, sealing is not provided between the inner 71 and the outer 72. Thereby, when the clutch 70 is disconnected, it is possible to quickly discharge an oil in the working chamber 137. Therefore, according to the embodiment, it is possible to improve the clutch 70 in responsibility. Also, according to the embodiment, an oil scattered from a gap between the leak hole or the inner 71 and the outer 72 can smoothly lubricate other slide portions.

A plate group 132 is provided on the fourth clutch 66. The plate group 132 comprises a plurality of friction plates 130 and a plurality of clutch plates 131. The plurality of friction plates 130 and the plurality of clutch plates 131 are laminated alternately in the vehicle width direction. The friction plates 130 are non-rotatable relative to the outer 68. On the other hand, the clutch plates 131 are non-rotatable relative to the inner 67.

The inner 67 is rotatable relative to the outer 68 and capable of displacement thereto in the vehicle width direction. A pressure plate 161 is arranged on an opposite side of the inner 67 to the outer 68 in the vehicle width direction. The pressure plate 161 is biased leftward in the vehicle width direction by a compression coil spring 89. That is, the pressure plate 161 is biased toward the boss portion 162 by the compression coil spring 89.

A working chamber 133 is compartmented and formed between the boss portion 162 and the pressure plate 161. The working chamber 133 is filled with an oil. When hydraulic pressure in the working chamber 133 increases, the pressure plate 161 is displaced in a direction away from the boss portion 162. Thereby, a distance between the pressure plate 161 and the inner 67 shortens. Accordingly, the plate group 132 is put in a state of mutual pressure contact. Consequently, the inner 67 and the outer 68 rotate together to put the fourth clutch 66 in a connected state.

On the other hand, when hydraulic pressure in the working chamber 133 decreases, the pressure plate 161 is displaced toward the boss portion 162 by the compression coil spring 89. Thereby, the state of pressure contact of the plate group 132 is released. Consequently, both the inner 67 and the outer 68 become able to rotate relative to each other to achieve disconnection of the fourth clutch 66.

In addition, while depiction is omitted, the fourth clutch 66 is formed with a minute leak hole, which is communicated to the working chamber 133. Also, sealing is not provided between the inner 67 and the outer 68. Thereby, when the clutch 66 is disconnected, it is possible to quickly discharge an oil in the working chamber 133. Therefore, according to the embodiment, it is possible to improve the clutch 66 in responsibility. Also, according to the embodiment, an oil scattered from a gap between the leak hole or the inner 67 and the outer 68 can smoothly lubricate other slide portions.

### - Oil path 139 -

As shown in Fig. 7, pressure in the working chamber 133 of the fourth clutch 66 and pressure in the working chamber 137 of the third clutch 70 are given and regulated by an oil pump 140. As shown in Fig. 7, an oil reservoir 99 is formed at a bottom of the crank chamber 35. A strainer 141 is immersed in the oil reservoir 99. The strainer 141 is connected to the oil pump 140. The oil pump 140 is driven, so that an oil stored in the oil reservoir 99 is sucked through the strainer 141.

A relief valve 147 is provided midway a first oil path 144. The oil as sucked is purified in an oil cleaner 142 and regulated to a predetermined pressure by the relief valve 147. Thereafter, a part of the purified oil is supplied to the crank shaft 34 and slide portions in the cylinder head 40. Also, a part of the purified oil is also supplied to the working chamber 133 of the fourth clutch 66 and the working chamber 137 of the third clutch 70. Specifically, a second oil path 145 and a third oil path 146 are connected to the first oil path 144 extending from the oil cleaner 142. The second oil path 145 passes on a side toward the transmission cover 50 from a valve 143 to extend into the second rotating shaft 54 from a right end of the second rotating shaft 54. The second oil path 145 extends to the working chamber 133. Therefore, an oil is supplied to the working chamber 133 via the second oil path 145 to regulate pressure in the working chamber 133. On the other hand, the third oil path 146 passes on a side toward the crank case 32 from the valve 143 to extend into the second rotating shaft 54 from a left end of the second rotating shaft 54. The third oil path 146 extends to the working chamber 137. Therefore, an oil is supplied to the working chamber 137 via the third oil path 146.

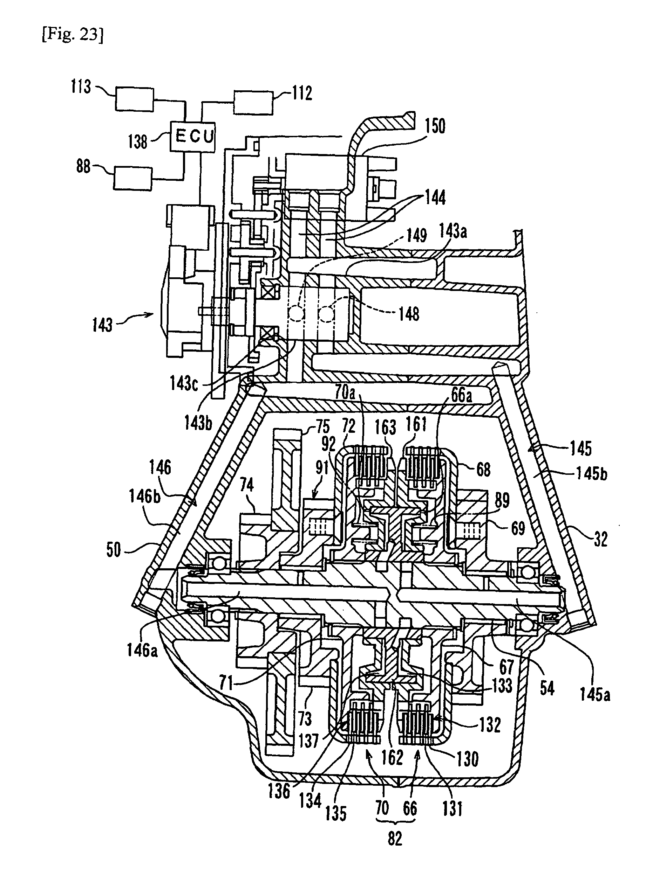

As shown in Fig. 23, the second oil path 145 includes a first rotating shaft side oil path 145a and a first case side oil path 145b. The first rotating shaft side oil path 145a extends leftward from the right end of the second rotating shaft 54. A left end of the first rotating shaft side oil path 145a is connected to the working chamber 133 of the fourth clutch 66. A right end of the first rotating shaft side oil path 145a is connected to the first case side oil path 145b. The first case side oil path 145b is formed on the crank case 32 shown in Fig. 2.

The third oil path 146 includes a second rotating shaft side oil path 146a and a second case side oil path 146b. The second rotating shaft side oil path 146a extends rightward from the left end of the second rotating shaft 54. A right end of the second rotating shaft side oil path 146a is connected to the working chamber 137 of the third clutch 70. A left end of the second rotating shaft side oil path 146a is connected to the second case side oil path 146b. The second case side oil path 146b is formed on the transmission cover 50 shown in Fig. 2.

As shown in Fig. 7, the valve 143 is provided at a connection of the first oil path 144 to the second oil path 145 and the third oil path 146. The valve 143 opens and closes between the first oil path 144 and the third oil path 146 and opens and closes between the first oil path 144 and the second oil path 145.

As shown in Fig. 18, a motor 150 for driving of the valve 143 is mounted to the valve 143. The motor 150 drives the valve 143 to perform connection and disconnection between the third clutch 70 and the fourth clutch 66. That is, according to the embodiment, the oil pump 140, the valve 143, and the motor 150 constitute an actuator 103 that applies hydraulic pressure to the third clutch 70 and the fourth clutch 66, which comprise a hydraulic clutch. The actuator 103 is controlled by an ECU 138 shown in Fig. 18, so that hydraulic pressure to the third clutch 70 and the fourth clutch 66 is regulated. Specifically, hydraulic pressure to the working chamber 133 and the working chamber 137 is regulated. Thereby, connection and disconnection of the third clutch 70 and the fourth clutch 66 are performed.

Stated more specifically, as shown in Fig. 18, a throttle opening degree sensor 112 and a speed sensor 88 are connected to the ECU 138. The ECU 138 as a control unit controls the actuator 103 on the basis of at least one of the throttle opening degree detected by the throttle opening degree sensor 112 and the car speed detected by the speed sensor 88. According to the embodiment, the ECU 138 as a control unit controls the actuator 103 on the basis of both the throttle opening degree detected by the throttle opening degree sensor 112 and the car speed detected by the speed sensor 88. Specifically, the ECU 138 controls the actuator 103 on the basis of information, which is obtained by applying the throttle opening degree detected by the throttle opening degree sensor 112 and the car speed detected by the speed sensor 88 to a V-N diagram read from a memory 113.

Specifically, the valve 143 is formed to be substantially columnar-shaped. The valve 143 is formed with an internal path 148 for communication of the first oil path 144 and the second oil path 145 and an internal path 149 for communication of the first oil path 144 and the third oil path 146. The valve 143 is turned by the motor 150 to cause the internal paths 148, 149 to select any one of a position, in which the first oil path 144 and the second oil path 145 are communicated to each other but the first oil path 144 and the third oil path 146 are disconnected from each other, a position, in which the first oil path 144 and the third oil path 146 are communicated to each other but the first oil path 144 and the second oil path 145 are disconnected from each other, and a position, in which the first oil path 144 and the third oil path 146 are disconnected from each other and the first oil path 144 and the second oil path 145 are disconnected from each other. Thereby, any one of a state, in which both the fourth clutch 66 and the third clutch 70 are disconnected, a state, in which the fourth clutch 66 is connected but the third clutch 70 is disconnected, or a state, in which the fourth clutch 66 is disconnected but the third clutch 70 is connected, is selected.

### - Operation of transmission 31 -

Subsequently, referring mainly to Figs. 9 to 12, an explanation will be given further in detail to the operation of the transmission 31.

### - At the starting, 1-speed -

First, when the engine 30 starts up, rotation of the crank shaft 34 (= the input shaft 52) begins. The inner 56 of the first clutch 55 rotates together with the input shaft 52. Therefore, when the rotating speed of the input shaft 52 becomes larger than a predetermined rotating speed (= first rotating speed) and a centrifugal force being at least a predetermined magnitude begins to act on the inner 56, the first clutch 55 is connected as shown in Fig. 9. When the first clutch 55 is connected, the first transmission gear pair 86 rotates together with the outer 57 of the first clutch 55. Thereby, rotation of the input shaft 52 is transmitted to the first rotating shaft 53.

The ninth gear 87 rotates together with the first rotating shaft 53. Therefore, as the first rotating shaft 53 rotates, the first transmission gear pair 84 also rotates. Accordingly, rotation of the first rotating shaft 53 is transmitted to the second rotating shaft 54 through the first transmission gear pair 84.

The seventh gear 74 rotates together with the second rotating shaft 54. Therefore, as the second rotating shaft 54 rotates, the second transmission gear pair 85 also rotates. Accordingly, rotation of the second rotating shaft 54 is transmitted to the third rotating shaft 64 through the second transmission gear pair 85.

The thirteenth gear 79 rotates together with the third rotating shaft 64. Therefore, as the third rotating shaft 64 rotates, the third transmission gear pair 98 also rotates. Accordingly, rotation of the third rotating shaft 64 is transmitted to the output shaft 33 through the third transmission gear pair 98.

In this manner, when the moped 2 starts up, that is, at the time of 1-speed, rotation is transmitted to the output shaft 33 from the input shaft 52 through the first clutch 55, the first transmission gear pair 86, the first transmission gear pair 84, the second transmission gear pair 85, and the third transmission gear pair 98 as shown in Fig. 9.

### - 2-speed -

At the time of 1-speed, the twelfth gear 65 common to the ninth gear 87 rotates together with the first rotating shaft 53. Therefore, both the eleventh gear 62 in mesh with the twelfth gear 65 and the inner 60 of the second clutch 59 rotate. Accordingly, when the input shaft 52 is increased in rotating speed, the inner 60 of the second clutch 59 is also increased in rotating speed. When the rotating speed of the input shaft 52 becomes at least a second rotating speed being larger than the first rotating speed, the inner 60 is also increased correspondingly in rotating speed and the second clutch 59 is connected as shown in Fig. 10.

Here, according to the embodiment, the fourth transmission gear pair 83 is smaller in gear ratio than the first transmission gear pair 86. Accordingly, the twelfth gear 65 becomes larger in rotating speed than the second gear 63. Therefore, rotation of the input shaft 52 is transmitted to the first rotating shaft 53 through the fourth transmission gear pair 83. On the other hand, rotation of the first rotating shaft 53 is not transmitted to the input shaft 52 by the one-way rotation transmitting mechanism 96.

In the same manner as at the time of 1-speed, rotation of the first rotating shaft 53 is transmitted to the output shaft 33 through the first transmission gear pair 84, the second transmission gear pair 85, and the third transmission gear pair 98.

In this manner, at the time of 2-speed, rotation is transmitted to the output shaft 33 from the input shaft 52 through the second clutch 59, the fourth transmission gear pair 83, the first transmission gear pair 84, the second transmission gear pair 85, and the third transmission gear pair 98 as shown in Fig. 10.

### - 3-speed -

At the time of 2-speed, the rotating speed of the crank shaft 34 (= the input shaft 52) becomes larger than the second rotating speed and the car speed become at least a predetermined car speed, the valve 143 is driven and the third clutch 70 is connected as shown in Fig. 11. Therefore, the third transmission gear pair 91 begins to rotate. Here, the third transmission gear pair 91 is smaller in gear ratio than the second transmission gear pair 85. Therefore, the sixth gear 77 of the third transmission gear pair 91 becomes larger in rotating speed than the eighth gear 78 of the second transmission gear pair 85. Therefore, rotation of the second rotating shaft 54 is transmitted to the third rotating shaft 64 through the third transmission gear pair 91. On the other hand, rotation of the third rotating shaft 64 is not transmitted to the second rotating shaft 54 by the one-way rotation transmitting mechanism 93.

In the same manner as at the time of 1-speed and 2-speed, rotation of the third rotating shaft 64 is transmitted to the output shaft 33 through the third transmission gear pair 98.

In this manner, at the time of 3-speed, rotation is transmitted to the output shaft 33 from the input shaft 52 through the second clutch 59, the fourth transmission gear pair 83, the first transmission gear pair 84, the third clutch 70, the third transmission gear pair 91, and the third transmission gear pair 98 as shown in Fig. 11.

### - 4-speed -

When at the time of 3-speed, the rotating speed of the crank shaft 34 (= the input shaft 52) becomes further large and the car speed become further large, the valve 143 is driven and the fourth clutch 66 is connected as shown in Fig. 12. On the other hand, the third clutch 70 is disconnected. Therefore, the second transmission gear pair 90 begins to rotate. Here, the second transmission gear pair 90 is also smaller in gear ratio than the second transmission gear pair 85. Therefore, the fourth gear 76 of the second transmission gear pair 90 becomes larger in rotating speed than the eighth gear 78 of the second transmission gear pair 85. Therefore, rotation of the second rotating shaft 54 is transmitted to the third rotating shaft 64 through the second transmission gear pair 90. On the other hand, rotation of the third rotating shaft 64 is not transmitted to the second rotating shaft 54 by the one-way rotation transmitting mechanism 93.

In the same manner as at the time of 1-speed to 3-speed, rotation of the third rotating shaft 64 is transmitted to the output shaft 33 through the third transmission gear pair 98.

In this manner, at the time of 4-speed, rotation is transmitted to the output shaft 33 from the input shaft 52 through the second clutch 59, the fourth transmission gear pair 83, the first transmission gear pair 84, the fourth clutch 66, the second transmission gear pair 90, and the third transmission gear pair 98 as shown in Fig. 12.

As described above, in Embodiments 1 and 2, the third and fourth clutches 70, 66 comprise a hydraulic clutch. Therefore, it is possible to improve the transmission gear operation in stability and to reduce energy loss at the time of shift change. Also, it is possible to have the third and fourth clutches 70, 66 connected and disconnected irrespective of the rotating speed of the second rotating shaft 54. Also, for example, timing of shift change to 3-speed and 4-speed can be appropriately modified according to, for example, a traveling state, the rotating speed of an engine, etc. Accordingly, it is possible to realize a high energy transmission efficiency.

By the way, in the case where a plurality of hydraulic clutches are arranged on a single rotating shaft as in the embodiment, a multiple pipe such as a double tube, etc. is generally used for supplying of an oil to respective clutches. The reason for this is that since working oil supply paths can be reduced in number by adopting a multiple pipe, it is possible to make a stepped automatic transmission simple in construction.

However, in case of using a multiple pipe, an inner oil path and an outer oil path are considerably different in cross sectional shape from each other. Specifically, while an inner oil path is circular-shaped in cross section, an outer oil path is ring-shaped in cross section. Therefore, an inner oil path and an outer oil path are different in fluid flow characteristic of a working oil from each other. Therefore, in case of using a multiple pipe, it is difficult in each of two or more hydraulic clutches arranged coaxially to attain a predetermined clutch capacity under various conditions. Accordingly, there is caused a problem that it is hard to obtain a stable clutch characteristic.

In particular, a working oil is varied considerably in temperature on a straddle-type vehicle with a relatively high engine speed. Therefore, it is especially difficult to attain a predetermined clutch capacity under various conditions. Accordingly, it is hard to obtain a stable clutch characteristic.

In contrast, according to the embodiment, as shown in Figs. 22 and 23, the first rotating shaft side oil path 145a extends leftward from the right end of the second rotating shaft 54. The second rotating shaft side oil path 146a extends rightward from the left end of the second rotating shaft 54. The first rotating shaft side oil path 145a and the second rotating shaft side oil path 146a are provided in different positions in the axial direction of the second rotating shaft 54. The first and second rotating shaft side oil paths 145a, 146a, respectively, are substantially the same in cross sectional shape. Specifically, the first and second rotating shaft side oil paths 145a, 146a, respectively, are formed to be substantially circular-shaped in cross section. Therefore, it is possible to decrease, for example, a difference between a centrifugal, hydraulic pressure acting on an oil in the first rotating shaft side oil path 145a and a centrifugal, hydraulic pressure acting on an oil in the second rotating shaft side oil path 146a. Therefore, it is possible to decrease a difference in fluid flow characteristic between an oil in the first rotating shaft side oil path 145a and an oil in the second rotating shaft side oil path 146a. Therefore, it is possible in both the third and fourth clutches 70, 66 to realize a predetermined clutch capacity under various conditions. Accordingly, it is possible in both the third and fourth clutches 70, 66 to achieve stability in clutch characteristic. Consequently, it is possible to stabilize the transmission 31 in characteristic.

In Embodiments 1 and 2, as shown in Figs. 22 and 23, leak holes 66a, 70a communicated to the working chambers 133, 137 are formed. Therefore, when the clutches 66, 70 are disconnected, the working chambers 133, 137 of the clutches 66, 70 are quickly decreased in hydraulic pressure. Accordingly, it is possible to heighten the third and fourth clutches 70, 66 in responsibility.

In addition, "leak hole" in the specification of the present application means a hole for leakage of an oil. The leak hole is typically formed to be circular-shaped in cross section. However, the leak hole is not especially limitative but can be appropriately set according to the characteristic of a clutch. Also, the leak hole may be formed by a fitting gap between a boss portion, which defines a working chamber, and a pressure plate.

The leak hole is not especially limitative as far as it is sized to put a clutch in a connected state when hydraulic pressure is supplied to a working chamber. For example, in case of a leak hole being substantially circular-shaped in cross section, the leak hole generally has a diameter of around 1 to 2 mm.

According to the embodiment, speed is varied between the input shaft 52 and the first rotating shaft 53 and between the second rotating shaft 54 and the third rotating shaft 64. Specifically, the first transmission gear pair 86 and the second transmission gear pair 83 are provided between the input shaft 52 and the first rotating shaft 53. The third transmission gear pair 91 and the fourth transmission gear pair 90 are provided between the second rotating shaft 54 and the third rotating shaft 64. Therefore, the transmission 31 can be made simple in construction as compared with the case where a transmission mechanism provided on a single rotating shaft is used in a transmission, in which a planetary gear is used. It is possible to make the transmission 31 compact.

Further, according to the embodiment, the fourth gear 65 of the second transmission gear pair 83 and the fifth gear 87 of the first transmission gear pair 84 are common to each other. Therefore, it is possible to make the transmission 31 further compact.

Also, in this manner, according to the embodiment, the first rotating shaft 53 and the third rotating shaft 64, which are provided for speed change, are made use of to perform power transmission between the input shaft 52 and the output shaft 33 in a so-called gear train system. Therefore, there is no need of providing separate power transmission means such as chain, etc. Further, there is no need of separately providing a member, such as chain guide, chain tensioner, etc., which inhibits flutter of a chain, in case of providing, for example, a chain. Therefore, it is possible to make the transmission 31 especially simple in construction. Besides, it is possible to make the transmission 31 especially compact.

According to the embodiment, since the input shaft 52, the first rotating shaft 53, the second rotating shaft 54, the third rotating shaft 64, and the output shaft 33 are aligned in a longitudinal direction perpendicular to the axial direction of the input shaft 52, it is possible to make the transmission 31 compact in the axial direction of the input shaft 52. Consequently, it is possible to restrict the width of the scooter type vehicle 1 in the vehicle width direction. Accordingly, it is possible to make the scooter type vehicle 1 relatively large in bank angle.

In particular, according to the embodiment, the upstream clutch group 81 and the downstream clutch group 82 are arranged to at least partially overlap each other in the axial direction of the input shaft 52. Therefore, it is possible to decrease the width of the transmission 31 in the axial direction of the input shaft 52 as compared with the case where the upstream clutch group 81 and the downstream clutch group 82 do not overlap each other in the axial direction of the input shaft 52. Consequently, it is possible to further decrease the width of the scooter type vehicle 1 in the vehicle width direction. From the viewpoint of further decreasing the width of the scooter type vehicle 1 in the vehicle width direction, the upstream clutch group 81 and the downstream clutch group 82 preferably overlap each other substantially in the axial direction of the input shaft 52.

According to the embodiment, the first clutch 55 and the fourth clutch 66 are arranged to at least partially overlap each other in the vehicle width direction and the second clutch 59 and the third clutch 70 are arranged to at least partially overlap each other in the vehicle width direction. Therefore, it is possible to decrease the width of the transmission 31 in the axial direction of the input shaft 52. From the viewpoint of further decreasing the width of the transmission 31 in the axial direction of the input shaft 52, it is preferred that the first clutch 55 and the fourth clutch 66 are arranged to substantially overlap each other in the vehicle width direction and the second clutch 59 and the third clutch 70 are arranged to substantially overlap each other in the vehicle width direction.

Further, according to the embodiment, the first transmission gear pair 86 and the fourth transmission gear pair 90 are arranged to at least partially overlap each other in the axial direction of the input shaft 52. The second transmission gear pair 83 and the third transmission gear pair 91 are arranged to at least partially overlap each other. Therefore, it is possible to especially decrease the width of the transmission 31 in the axial direction of the input shaft 52.

For example, it is also conceivable to arrange the first transmission gear pair 86 rightwardly of the first clutch 55 and to arrange the fourth transmission gear pair 90 leftwardly of the fourth clutch 66. It is also conceivable to arrange the second transmission gear pair 83 leftwardly of the second clutch 59 and to arrange the third transmission gear pair 91 rightwardly of the third clutch 70. That is, it is also conceivable to arrange the first transmission gear pair 86 and the fourth transmission gear pair 90 on opposite sides to each other relative to the first clutch 55 and the fourth clutch 66, which are aligned in a longitudinal direction. It is also conceivable to arrange the second transmission gear pair 83 and the third transmission gear pair 91 on opposite sides to each other relative to the second clutch 59 and the third clutch 70, which are aligned in a longitudinal direction. However, in case of such arrangement, the width of the transmission 31 in the vehicle width direction becomes relatively large.

In contrast, as in the embodiment, the width of the transmission 31 in the vehicle width direction can be restricted by positioning the fourth transmission gear pair 90 on the same side relative to the fourth clutch 66 as that side, on which the first transmission gear pair 86 is positioned relative to the first clutch 55 and positioning the third transmission gear pair 91 on the same side relative to the third clutch 70 as that side, on which the second transmission gear pair 83 is positioned relative to the second clutch 59. In other words, the width of the transmission 31 in the vehicle width direction can be decreased by arranging the first transmission gear pair 86 and the fourth transmission gear pair 90 on the same side relative to the first clutch 55 and the fourth clutch 66, which are aligned in a longitudinal direction and arranging the second transmission gear pair 83 and the third transmission gear pair 91 on the same side relative to the second clutch 59 and the third clutch 70, which are aligned in a longitudinal direction.

From the viewpoint of further decreasing the width of the transmission 31 in the vehicle width direction, it is preferable to arrange a plurality of clutches, which are arranged on the same rotating shaft, adjacent to one another. Specifically, as in the embodiment, it is preferable to arrange the first clutch 55 and the second clutch 59 between the first transmission gear pair 86 and the second transmission gear pair 83. It is preferable to arrange the third clutch 70 and the fourth clutch 66 between the third transmission gear pair 91 and the fourth transmission gear pair 90.

For example, it is possible to have the third clutch 70 and the fourth clutch 66 comprising a centrifugal clutch. In this case, for example, in the case where the third clutch 70 rather than the fourth clutch 66 is connected and disconnected when the second rotating shaft 54 is low in rotating speed, it is not possible to bring about a state, in which the fourth clutch 66 is connected but the third clutch 70 is disconnected. Therefore, in order to have the fourth transmission gear pair 90 performing power transmission between the second rotating shaft 54 and the third rotating shaft 64 in a state, in which both the third clutch 70 and the fourth clutch 66 are connected, it is necessary to provide a one-way clutch and a one-way gear. Therefore, the transmission 31 tends to become complex in construction. In contrast, according to the embodiment, the third clutch 70 and the fourth clutch 66 comprise a hydraulic clutch. Therefore, the third clutch 70 and the fourth clutch 66 can be freely connected and disconnected. Accordingly, it is not necessary to provide a one-way clutch and a one-way gear separately. Accordingly, it is possible to make the transmission 31 further simple in construction.

According to Embodiments 1 and 2, the third clutch 70 and the fourth clutch 66 comprise a hydraulic clutch. Therefore, connection and disconnection of the third clutch 70 and the fourth clutch 66 are performed relatively quickly. In other words, at the time of clutch connection and disconnection, the third clutch 70 and the fourth clutch 66 will not slide over a relatively long period of time. Therefore, energy loss in the third clutch 70 and the fourth clutch 66 becomes relatively small in magnitude. Accordingly, it is possible to improve the scooter type vehicle 1 in fuel consumption.

From only the viewpoint of improving the scooter type vehicle 1 in fuel consumption, it is preferred that the first clutch 55 and the second clutch 59 comprise a hydraulic clutch together with the third clutch 70 and the fourth clutch 66. However, connection and disconnection of a hydraulic clutch are performed relatively quickly. Therefore, in the case where the first clutch 55 comprises a hydraulic clutch, the first clutch 55 is connected abruptly at the start-up. Therefore, smooth start-up is made difficult. Accordingly, it is not possible to make smooth start-up and an improvement in fuel consumption compatible.

In contrast, according to Embodiments 1 and 2, the first clutch 55 provided for the first transmission gear pair 86 of 1-speed comprises a centrifugal clutch. Connection and disconnection of a centrifugal clutch are performed relatively slowly as compared with a hydraulic clutch. Therefore, smooth start-up of a vehicle is realized. That is, by providing for a configuration, in which the first clutch 55 provided for the first transmission gear pair 86 of 1-speed comprises a centrifugal clutch and at least one of clutches for transmission gear pairs on a higher speed side than the first clutch comprises a hydraulic clutch, it is possible to achieve an improvement in fuel consumption and to realize smooth start-up. In particular, from the viewpoint of realizing smooth start-up and acceleration of a vehicle, it is preferred that the second clutch 59 comprises a centrifugal clutch.

In addition, although the first clutch 55 and the second clutch 59 for 1-speed and 2-speed comprise a centrifugal clutch, they will not slide continuously over a considerably long period of time. Also, traveling in 1-speed and 2-speed is relatively small in frequency. That is, traveling time in 1-speed and 2-speed amounts to a relatively small proportion in total traveling time. Accordingly, a decrease in fuel consumption is not so much even in the case where the first clutch 55 and the second clutch 59 comprise a centrifugal clutch.

However, in the case where an improvement in fuel consumption should be made preferential to smoothness in acceleration, the first clutch 55 may comprise a centrifugal clutch and other clutches than the first clutch may comprise a hydraulic clutch.

That is, by using two or more hydraulic clutches as in Embodiments 1 and 2, a further improvement in fuel consumption is achieved.

In Embodiments 1 and 2, since the first clutch 55 comprises a centrifugal clutch, a manner, in which the first clutch 55 is connected, is appropriately varied according to a manipulated variable of a throttle operating element, vehicle speed, acceleration of a vehicle, etc. Therefore, by making the first clutch 55 a centrifugal clutch, operating, in which a rider's intention is reflected, is made possible.

For example, in the case where a rider operates a throttle operating element much so as to bring about start-up at a relatively large acceleration, the first clutch 55 is connected relatively quickly, so that start-up at a relatively large acceleration is brought about. On the other hand, in the case where a rider operates a throttle operating element a little so as to bring about smooth start-up at a relatively small acceleration, the first clutch 55 is connected relatively slowly, so that smooth start-up at a relatively small acceleration is brought about. Accordingly, a high drivability is realized.

While timing, in which a centrifugal clutch is connected and disconnected, is determined according to engine speed, timing, in which a hydraulic clutch is connected and disconnected, can be freely controlled by controlling the ECU 138. That is, by using two or more hydraulic clutches, freedom in controlling the transmission 31 is further heightened. Specifically, it is possible to finely regulate control of connection and disconnection of a clutch on the basis of a traveling state and operation by a rider. Specifically, it is possible to fmely control connection and disconnection of a clutch on the basis of at least one of throttle opening degree and car speed.

For example, in the case where a plurality of hydraulic clutches are used as in Embodiments and 2, it is preferable to arrange the plurality of hydraulic clutches on the same rotating shaft. Specifically, with Embodiments 1 and 2, it is preferable to arrange the third clutch 70 and the fourth clutch 66, which comprise a hydraulic clutch, on the same second rotating shaft 54. By doing so, it is possible to make oil feed paths to hydraulic clutches relatively simple. Accordingly, it is possible to make the transmission 31 further simple in construction.

Also, it is possible to reduce rotating shafts, in which oil feed paths are formed, in number. Accordingly, manufacture of the transmission 31 is made easy, thus enabling reduction in manufacturing cost.

In particular, from the viewpoint of making the transmission 31 simple in construction, it is preferred as in Embodiments 1 and 2 that a rotating shaft, to which a centrifugal clutch is mounted, and a rotating shaft, to which a a hydraulic clutch is mounted, be separated from each other. Specifically, with Embodiments 1 and 2, it is preferable to provide the first clutch 55 and the second clutch 59, which comprise a centrifugal clutch, on the input shaft 52 and to provide the third clutch 70 and the fourth clutch 66, which comprise a hydraulic clutch, on the second rotating shaft 54.

### <<Modification 1>>

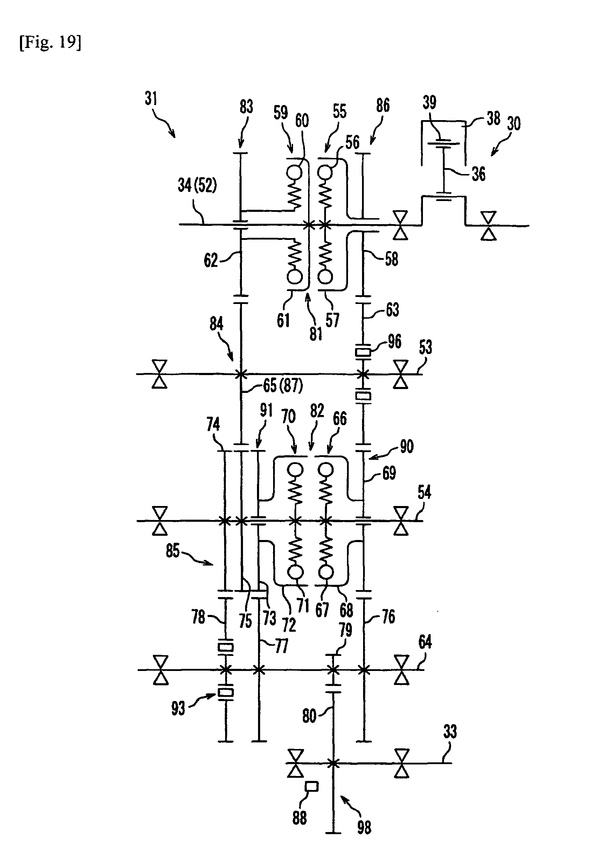

The embodiments have been described with respect to an example, in which the outer 57 of the first clutch 55 and the outer 61 of the second clutch 59 are formed from the same member. However, the invention is not limited to the construction. For example, as shown in Fig. 19, the outer 57 of the first clutch 55 and the outer 61 of the second clutch 59 may be provided separately.

### <<Modification 2>>

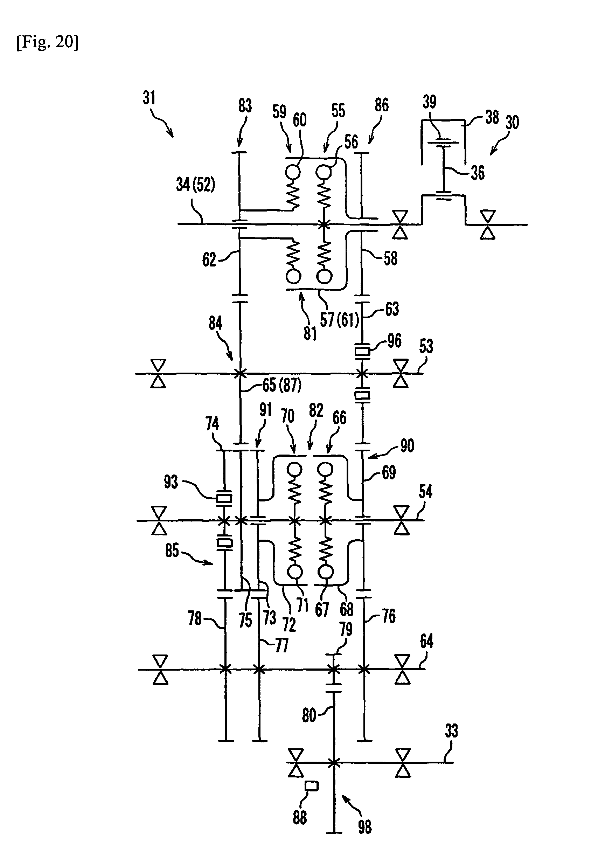

The embodiments have been described with respect to an example, in which the one-way rotation transmitting mechanism 93 is arranged for the eighth gear 78. However, the invention is not limited to the construction. For example, as shown in Fig. 20, the one-way rotation transmitting mechanism 93 may be arranged for the seventh gear 74.

### <<Modification 3>>

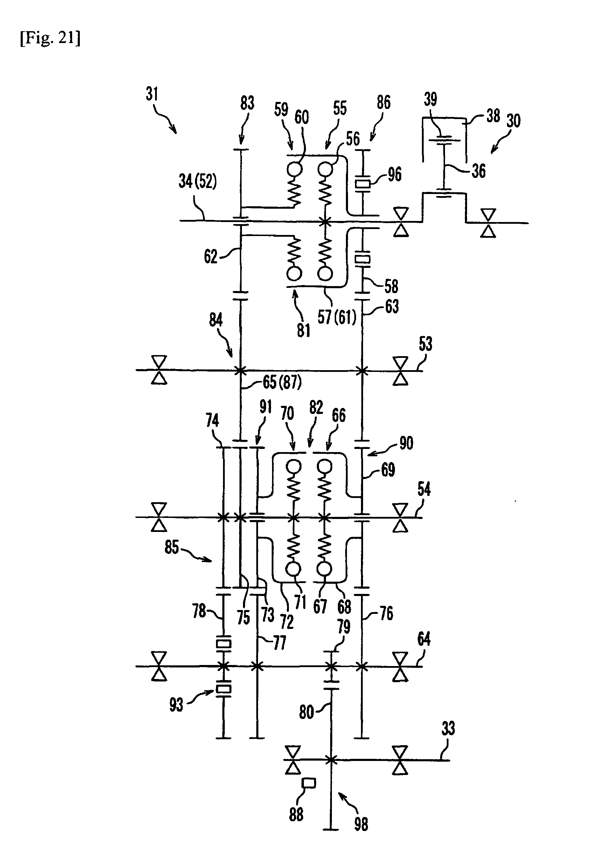

The embodiments have been described with respect to an example, in which the one-way rotation transmitting mechanism 96 is arranged for the second gear 63. However, the invention is not limited to the construction. For example, as shown in Fig. 21, the one-way rotation transmitting mechanism 96 may be arranged for the first gear 58.

### <<Other modifications>>

The embodiments have been described with respect to an example, in which the engine 30 is a single cylinder engine. In the invention, however, the engine 30 is not limited to a single cylinder engine. The engine 30 may be a multi-cylinder engine such as two cylinder engine, etc.

The embodiments have been described with respect to an example, in which the output shaft 33 and the third rotating shaft 64, respectively, are provided separately. However, the invention is not limited to the construction. The output shaft 33 and the third rotating shaft 64 may be common to each other. In other words, the rear wheel 18 may be mounted to the third rotating shaft 64.

In addition, Embodiments 1 and 2 and respective modifications have been described with respect to an example, in which gear pairs mesh directly with each other. However, the invention is not limited to the construction. Gear pairs mesh indirectly through a gear, which is separately provided, with each other.

As shown in Fig. 15, Embodiment 2 has been described with respect to an example, in which the first rotating shaft 53 is arranged so that the axis C2 of the first rotating shaft 53 is positioned in a higher position than that of the axis C4 of the third rotating shaft 64. However, the invention is not limited to the construction. For example, the first rotating shaft 53 may be arranged so that the axis C2 of the first rotating shaft 53 is positioned in a lower position than that of the axis C4 of the third rotating shaft 64. Specifically, the first rotating shaft 53 may be arranged so that the axis C2 of the first rotating shaft 53 is positioned below the plane P. The third rotating shaft 64 may be arranged so that the axis C4 of the third rotating shaft 64 is positioned above the plane P.

### <<Definition of terms, etc. in the specification of the present application>>

In the specification of the present application, "motorcycle" is not limited to a motorcycle in a so-called narrow sense. "motorcycle" means a motorcycle in a so-called wide sense. Specifically, in the specification of the present application, "motorcycle" means general vehicles, of which direction is changed by inclining the vehicle. Therefore, "motorcycle" is not limited to an auto-two-wheeler. At least one of a front wheel and a rear wheel may comprise a plurality of wheels. Specifically, "motorcycle" may be a vehicle, in which at least one of a front wheel and a rear wheel comprises two wheels arranged adjacent to each other. At least a motorcycle in a narrow sense, a scooter type vehicle, a moped type vehicle, and an off-road type vehicle are included in "motorcycle".

"Centrifugal clutch" means a clutch, which includes an input side clutch member and an output side clutch member and in which the input side clutch member and the output side clutch member engage with each other to be connected to each other when the rotating speed of the input side clutch member is at least a predetermined rotating speed and the input side clutch member and the output side clutch member separate from each other to be disconnected from each other when the rotating speed of the input side clutch member is less than the predetermined rotating speed.

### [Industrial Applicability]

The invention is useful in stepped automatic transmissions and vehicles such as motorcycles, etc.

## Claims

1. A stepped automatic transmission of a straddle-type vehicle comprising a right case (32),
a left case (50) arranged leftwardly of the right case (32) to compartment and form a transmission chamber together with the right case (32),
a rotating shaft (54) rotatably supported by the right case (32) and the left case (50) in the transmission chamber,
a first hydraulic clutch (66) provided on the rotating shaft (54) and including a working chamber (133), and
a second hydraulic clutch (70) provided leftwardly of the first hydraulic clutch (66) on the rotating shaft (54) and including a working chamber (137), and wherein
the rotating shaft (54) is formed with a first rotating shaft side oil path (145a), which is connected to the working chamber (133) of the first hydraulic clutch (66), and a second rotating shaft side oil path (146a), which is connected to the working chamber (137) of the second hydraulic clutch (70), and made independent of the first rotating shaft side oil path (145a), **characterized in that** the first rotating shaft oil path (145a) and the second rotating shaft oil path (146a) extend respectively leftward from a right end and rightward from a left end of the rotating shaft (54),
the right case (32) is formed with a first case side oil path (145b), which is connected to the first rotating shaft side oil path (145a), and
the left case is formed with a second case side oil path (156b), which is connected to the second rotating shaft side oil path (146a).

2. The stepped automatic transmission of a straddle-type vehicle, according to claim 1, wherein at least one of the first and second hydraulic clutches (66, 70) comprises a clutch for transmission.

3. The stepped automatic transmission of a straddle-type vehicle, according to claim 1, wherein at least one of the first hydraulic clutch (66) and the second hydraulic clutch (70) is formed with a communication hole (66a, 70a), which is communicated to the working chamber (133, 137).

4. The stepped automatic transmission of a straddle-type vehicle, according to claim 3, wherein the communication hole (66a, 70a) is a leak hole serving to cause an oil in the working chamber (133, 137) to leak outside the working chamber (133, 137).

5. A power unit comprising the stepped automatic transmission according to claim 1.

6. A straddle-type vehicle comprising the power unit according to claim 5.

7. The straddle-type vehicle, according to claim 6, being a motorcycle.

## Patentansprüche

1. Ein automatisches Stufengetriebe eines Grätsch-Typ-Fahrzeugs, das folgende Merkmale aufweist:
ein rechtes Gehäuse (32),
ein linkes Gehäuse (50), das links von dem rechten Gehäuse (32) angeordnet ist, um zusammen mit dem rechten Gehäuse (32) eine Getriebekammer zu unterteilen und zu bilden,
eine Drehwelle (54), die durch das rechte Gehäuse (32) und das linke Gehäuse (50) in der Getriebekammer drehbar getragen wird,
eine erste hydraulische Kupplung (66), die auf der Drehwelle (54) vorgesehen ist und eine Arbeitskammer (133) umfasst, und
eine zweite hydraulische Kupplung (70), die links von der ersten hydraulischen Kupplung (66) auf der Drehwelle (54) vorgesehen ist und eine Arbeitskammer (137) umfasst, und wobei
die Drehwelle (54) mit einem ersten Drehwellenseitenölweg (145a) gebildet ist, der mit der Arbeitskammer (133) der ersten hydraulischen Kupplung (66) verbunden ist, und einem zweiten Drehwellenseitenölweg (146a), der mit der Arbeitskammer (137) der zweiten hydraulischen Kupplung (70) verbunden ist, und unabhängig ist von dem ersten Drehwellenseitenölweg (145a),
**dadurch gekennzeichnet, dass**
der erste Drehwellenölweg (145a) und der zweite Drehwellenölweg (146a) sich jeweils nach links von einem rechten Ende und nach rechts von einem linken Ende der Drehwelle (54) erstrecken,
das rechte Gehäuse (32) mit einem ersten Gehäuseseitenölweg (145b) gebildet ist, der mit dem ersten Drehwellenseitenölweg (145a) verbunden ist, und
das linke Gehäuse mit einem zweiten Gehäuseseitenölweg (156b) gebildet ist, der mit dem zweiten Drehwellenseitenölweg (146a) gebildet ist.

2. Das automatische Stufengetriebe eines Grätsch-Typ-Fahrzeugs gemäß Anspruch 1, bei dem zumindest entweder die erste oder die zweite hydraulische Kupplung (66, 70) eine Kupplung für Übertragung aufweist.

3. Das automatische Stufengetriebe eines Grätsch-Typ-Fahrzeugs gemäß Anspruch 1, bei dem zumindest entweder die erste hydraulische Kupplung (66) oder die zweite hydraulische Kupplung (70) mit einem Kommunikationsloch (66a, 70a) gebildet ist, das zu der Arbeitskammer (133, 137) kommuniziert wird.

4. Das automatische Stufengetriebe eines Grätsch-Typ-Fahrzeugs gemäß Anspruch 3, bei der das Kommunikationsloch (66a, 70a) ein Leckloch ist, das dazu dient, dass Öl in der Arbeitskammer (133, 137) aus der Arbeitskammer (133, 137) ausläuft.

5. Eine Leistungseinheit, die das automatische Stufengetriebe gemäß Anspruch 1 aufweist.

6. Ein Grätsch-Typ-Fahrzeug, das die Leistungseinheit gemäß Anspruch 5 aufweist.

7. Das Grätsch-Typ-Fahrzeug gemäß Anspruch 6, das ein Motorrad ist.

## Revendications

1. Transmission automatique étagée d'un véhicule de type à conduite à califourchon, comprenant
un carter droit (32),
un carter gauche (50) disposé à gauche du carter droit (32), destiné à compartimenter et former une chambre de transmission ensemble avec le carter droit (32),
un arbre rotatif (54) supporté de manière rotative par le carter droit (32) et le carter gauche (50) dans la chambre de transmission,
un premier embrayage hydraulique (66) prévu sur l'arbre rotatif (54) et comportant une chambre de travail (133), et
un deuxième embrayage hydraulique (70) prévu à gauche du premier embrayage hydraulique (66) sur l'arbre rotatif (54) et comportant une chambre de travail (137), et
dans lequel l'arbre rotatif (54) est formé avec un premier trajet d'huile du côté de l'arbre rotatif (145a) qui est connecté à la chambre de travail (133) du premier embrayage hydraulique (66), et un deuxième trajet d'huile du côté de l'arbre rotatif (146a) qui est connecté à la chambre de travail (137) du deuxième embrayage hydraulique (70) et rendu indépendant du premier trajet d'huile du côté de l'arbre rotatif (145a),
**caractérisée par le fait que** le premier trajet d'huile du côté de l'arbre rotatif (145a) et le deuxième trajet d'huile du côté de l'arbre rotatif (146a) s'étendent respectivement à gauche de l'extrémité droite et à droite de l'extrémité gauche de l'arbre rotatif (54),
le carter droit (32) est formé avec un premier trajet d'huile du côté du carter (145b) qui est connecté au premier trajet d'huile du côté de l'arbre rotatif (145a), et
le carter gauche est formé avec un deuxième trajet d'huile du côté du carter (156b) qui est connecté au deuxième trajet d'huile du côté de l'arbre rotatif (146a).

2. Transmission automatique étagée d'un véhicule de type à conduite à califourchon selon la revendication 1, dans lequel au moins l'un parmi les premier et deuxième embrayages hydrauliques (66, 70) comprend un embrayage pour la transmission.

3. Transmission automatique étagée d'un véhicule de type à conduite à califourchon selon la revendication 1, dans lequel au moins l'un parmi le premier embrayage hydraulique (66) et le deuxième embrayage hydraulique (70) est formé avec un trou de communication (66a, 70a) qui est en communication avec la chambre de travail (133, 137).

4. Transmission automatique étagée d'un véhicule de type à conduite à califourchon selon la revendication 3, dans lequel le trou de communication (66a, 70a) est un trou de fuite servant à faire fuir une huile dans la chambre de travail (133, 137) à l'extérieur de la chambre de travail (133, 137).

5. Unité d'alimentation en énergie comprenant la transmission automatique étagée selon la revendication 1.

6. Véhicule de type à conduite à califourchon comprenant l'unité d'alimentation en énergie selon la revendication 5.

7. Véhicule de type à conduite à califourchon selon la revendication 6, qui est une motocyclette.
